(19)

Europäisches
Patentamt
European
Patent Office
Office européen
des brevets

(11) **EP 3 696 885 A1**

(12) **EUROPEAN PATENT APPLICATION**
published in accordance with Art. 153(4) EPC

(43) Date of publication:
**19.08.2020 Bulletin 2020/34**

(21) Application number: **18865631.8**

(22) Date of filing: **10.10.2018**

(51) Int Cl.:
**H01M 4/13** *(2010.01)*      **H01M 4/62** *(2006.01)*

(86) International application number:
**PCT/JP2018/037818**

(87) International publication number:
**WO 2019/074028 (18.04.2019 Gazette 2019/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.10.2017   JP 2017196951**

(71) Applicant: **Nissan Motor Co., Ltd.
Yokohama-shi, Kanagawa 221-0023 (JP)**

(72) Inventors:
• **TANAKA, Hiroyuki
Atsugi-shi
Kanagawa 243-0123 (JP)**

• **ENOKI, Kenichiro
Kyoto-shi
Kyoto 605-0995 (JP)**
• **IKEDA, Yoshihiro
Kyoto-shi
Kyoto 605-0995 (JP)**
• **MAEO, Naoki
Kyoto-shi
Kyoto 605-0995 (JP)**
• **ISOMURA, Shogo
Kyoto-shi
Kyoto 605-0995 (JP)**

(74) Representative: **Grünecker Patent- und
Rechtsanwälte
PartG mbB
Leopoldstraße 4
80802 München (DE)**

(54) **ELECTRODE FOR NONAQUEOUS ELECTROLYTE SECONDARY BATTERY**

(57)      To provide a means capable of achieving excellent input/output characteristics and cycle durability in a non-aqueous electrolyte secondary battery which is suitable for mounting on a vehicle.

An electrode for a non-aqueous electrolyte secondary battery includes a current collector, a first electrode active material layer including a first electrode active material, arranged on a surface of the current collector, and a second electrode active material layer including a second electrode active material, arranged on a surface of the first electrode active material layer, in which the first electrode active material layer includes a binder in a crystallized state and the second electrode active material layer does not substantially include a binder in a crystallized state.

**EP 3 696 885 A1**

**Description**

**TECHNICAL FIELD**

The present invention relates to an electrode for a non-aqueous electrolyte secondary battery.

**BACKGROUND ART**

In recent years, various electric vehicles have been expected to be distributed in order to solve environmental/energy issues. Intensive efforts have been made to develop a secondary battery as a vehicle-mounted power source such as a motor driving power source or the like which holds the key in distribution of those electric vehicles. A secondary battery having a higher energy density is preferable in order to extend a cruising distance at a first round of charge in an electric vehicle.

Examples of a means for increasing the energy density of a battery include a method involving increasing the density of an active material in an active material layer. However, if the density of the active material in the active material layer is increased, pores in the active material layer are reduced and the electrolyte (electrolyte solution) required for a charging and discharging reaction is not sufficiently permeated and held in some cases. As a result, problems such as a reduction in the energy density of the battery and deterioration in input-output characteristics at a high rate (charge/discharge performance at a high speed) and charge/discharge cycle characteristics (cycle durability) may rather occur.

Examples of technology for improving the battery charge/discharge cycle characteristics (cycle durability) of a battery include the technology described in JP 2006-66243 A. Specifically, in the technology described in JP 2006-66243 A, an active material mixture paste including a dispersant (a solvent such as N-methyl-2-pyrrolidone (NMP) and the like) and a binder is first applied onto a current collector. Then, the dispersant is removed by drying and a coating film is pressurized and subjected to a heat treatment at a temperature that is equal to or higher than the crystallization temperature and lower than the melting point of the binder. It is disclosed that the adhesion between the active materials and the adhesion between the active material mixture and the current collector can be improved, and the conductivity of an electrode and the like can be improved by producing an electrode for a non-aqueous electrolyte secondary battery in such a manner. In addition, it is also disclosed that cycle durability can be improved as a result of such an improvement.

**SUMMARY OF INVENTION**

Technical Problem

Meanwhile, examples of another means for increasing the energy density of a battery include a method for thickening an electrode active material layer (film thickening) per electrode. With such a configuration, a proportion of the volume of the electrode active material layer contributing to a battery reaction per unit volume of the battery is increased. As a result, the volume energy density is improved.

In particular, from the viewpoint that as the proportion of the binder included in the electrode active material layer is smaller, a battery capacity per unit volume is increased, and thus, a battery with a high capacity density can be obtained, a method for manufacturing an electrode without using a binder is used.

It was found that with the battery described in JP 2006-66243 A, cycle durability is excellent, but that it is difficult to thicken an electrode active material layer, and therefore, it is difficult to obtain a battery with a high capacity density. Specifically, according to the studies conducted by the present inventors, it was revealed that, if an electrode active material layer is thickened while applying the technology described in JP 2006-66243 A, cracks are generated in the electrode active material layer in a step of drying and removing a dispersant. In addition, it was also revealed that, if the cracks are generated in the electrode active material layer, deterioration in battery characteristics such as an increase in the internal resistance of a battery, a reduction in cycle durability, and an increase in a risk of lithium precipitation are caused.

On the other hand, a high capacity density can be obtained with a battery thickened without using a binder, but it is difficult to obtain excellent durability due to an insufficient interfacial adhesion between an electrode active material layer and a current collector. According to the studies conducted by the present inventors, it could be seen that it is necessary to constrain a battery at a high pressure of 400 kPa or more in order to obtain sufficient durability. However, in a case where a battery is mounted on a vehicle, the constraint pressure of the battery is hardly applied and it is necessary to secure cycle durability even when the constraint is not sufficient.

Therefore, it is an object of the present invention to provide a means capable of achieving excellent input/output characteristics and cycle durability in a non-aqueous electrolyte secondary battery which is suitable for mounting on a vehicle.

Solution to Problem

The present inventors have conducted extensive studies to solve the problem. As a result, they have found that it is effective to arrange an electrode active material layer including a binder in a crystallized state between a current collector and an electrode active material layer not including a binder in a crystallized state in an electrode for a non-aqueous electrolyte secondary battery, thereby leading to completion of the present invention.

That is, an aspect of the present invention relates to an electrode for a non-aqueous electrolyte secondary battery, having a current collector, a first electrode active material layer including a first electrode active material, arranged on a surface of the current collector, and a second electrode active material layer including a second electrode active material, arranged on a surface of the first electrode active material layer, in which the first electrode active material layer includes a binder in a crystallized state and the second electrode active material layer does not substantially include a binder in a crystallized state.

**BRIEF DESCRIPTION OF DRAWINGS**

Fig. 1 is a cross-sectional view schematically illustrating a bipolar secondary battery which is one embodiment of the present invention.

Fig. 2 is a cross-sectional view schematically illustrating an electrode for a bipolar secondary battery which is one embodiment of the present invention.

Fig. 3A is a scanning electron microscope (SEM) photograph illustrating a state where a binder (PVdF) in a non-crystallized state binds the constituents of an electrode active material layer, in a fibrous form.

Fig. 3B is a scanning electron microscope (SEM) photograph illustrating a state where a binder (PVdF) is included in an electrode active material layer in a state where it is crystallized under external stimulation such as a heat treatment and the like to form a spherical crystal.

Fig. 4 is a perspective view illustrating an appearance of a flat lithium ion secondary battery which is a typical embodiment of a secondary battery.

**DESCRIPTION OF EMBODIMENTS**

An aspect of the present invention relates to an electrode for a non-aqueous electrolyte secondary battery, having a current collector, a first electrode active material layer including a first electrode active material, arranged on a surface of the current collector, and a second electrode active material layer including a second electrode active material, arranged on a surface of the first electrode active material layer, in which the first electrode active material layer includes a binder in a crystallized state and the second electrode active material layer does not substantially include a binder in a crystallized state. With the electrode according to the present aspect, it is possible to sufficiently secure the adhesion between the current collector and the electrode active material layer even without a constraint at a high pressure by arranging the first electrode active material layer including the binder in a crystallized state on the current collector. As a result, it is possible to obtain a battery having excellent input/output characteristics and cycle durability. In addition, by laminating the second electrode active material layer not substantially including the binder in a crystallized state, it is possible to achieve an increase in the thickness of the electrode active material layer, and thus, obtain a battery with a high capacity density.

Hereinafter, although the embodiments of the present invention will be described with reference to drawings, the technical scope of the present invention should be determined based on the description of claims and is not limited only to the following aspects. Furthermore, as a preferred embodiment of the present invention, a bipolar lithium ion secondary battery, which is one kind of non-aqueous electrolyte secondary batteries, will be described, but is not limited to only the following embodiments. Incidentally, the dimensional ratio in the drawings is exaggerated for the sake of convenience of the description and may differ from the actual ratio in some cases. In the present specification, "X to Y" indicating a range means "X or more and Y or less". In addition, operation and measurement of physical properties and the like are performed under conditions of room temperature (20 to 25°C) /relative humidity of 40 to 50% RH unless otherwise specified.

In the present specification, the bipolar lithium ion secondary battery is simply referred to as a "bipolar secondary battery" and an electrode for the bipolar lithium ion secondary battery is also simply referred to as a "bipolar electrode".

<Bipolar Secondary Battery>

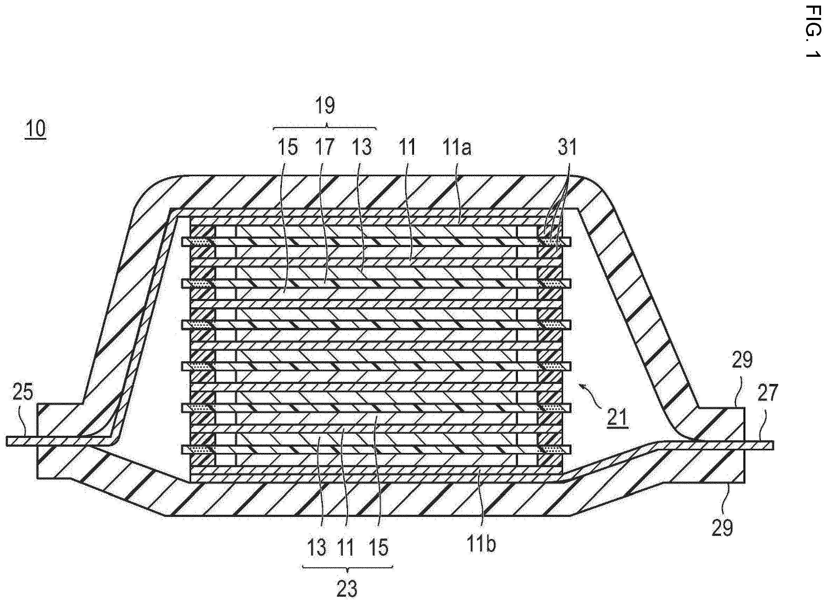

Fig. 1 is a cross-sectional view schematically illustrating a bipolar secondary battery which is one embodiment of the present invention. A bipolar secondary battery 10 shown in Fig. 1 has a structure in which a substantially rectangular power generating element 21, where a charging and discharging reaction actually proceeds, is sealed inside a laminate film 29 as a battery outer casing body.

As shown in Fig. 1, the power generating element 21 of the bipolar secondary battery 10 of the present aspect has a plurality of bipolar electrodes 23 in which a positive electrode active material layer 13 electrically bonded to one surface of a current collector 11 is formed and a negative electrode active material layer 15 bonded to the other surface of the current collector 11 is formed. The respective bipolar electrodes 23 are laminated via an electrolyte layer 17 to form the power generating element 21. Furthermore, the electrolyte layer 17 has a configuration in which an electrolyte is supported in planar center part of a separator as a substrate. In this case, each of the bipolar electrodes 23 and the electrolyte layer 17 are alternately laminated such that the positive electrode active material layer 13 of one of the bipolar electrodes 23 and the negative electrode active material layer 15 of the other bipolar electrode 23 that is adjacent to the one bipolar electrode 23 can face each other via the electrolyte layer 17. That is, these are arranged such that the electrolyte layer 17 is inserted between the positive electrode active material layer 13 of the one bipolar electrode 23 and the negative electrode active material layer 15 of the other bipolar electrode 23 that is adjacent to the one bipolar electrode 23.

The positive electrode active material layer 13, the electrolyte layer 17, and the negative electrode active material layer 15 which are adjacent to each other form one single battery layer 19. Thus, it may be mentioned that the bipolar secondary battery 10 has a configuration in which the single battery layer 19 is laminated. In addition, a seal part (insulating layer) 31 is arranged on outer periphery of the single battery layer 19. Accordingly, liquid junction caused by leakage of an electrolyte solution from the electrolyte layer 17 is prevented, and a contact between neighboring current collectors 11 in a battery or an occurrence of a short-circuit resulting from subtle displacement of an end part of the single battery layer 19 in the power generating element 21, or the like is prevented. Furthermore, the positive electrode active material layer 13 is formed on only one surface of the outermost layer current collector 11a on the positive electrode side which is present on the outermost layer of the power generating element 21. In addition, the negative electrode active material layer 15 is formed on only one surface of the outermost layer current collector 11b on the negative electrode side which is present on the outermost layer of the power generating element 21.

Furthermore, in the bipolar secondary battery 10 shown in Fig. 1, a positive electrode current collecting plate (positive electrode tab) 25 is arranged such that it is adjacent to the outermost layer current collector 11a on the positive electrode side, and extended and drawn from the laminate film 29 as a battery outer casing body. On the other hand, a negative electrode current collecting plate (negative electrode tab) 27 is arranged such that it is adjacent to the outermost layer current collector 11b on the negative electrode side, and also extended and drawn from the laminate film 29.

Moreover, the number of times of laminating the single battery layer 19 is adjusted depending on a desired voltage. Incidentally, in the bipolar secondary battery 10, the number of times of laminating the single battery layer 19 may be reduced if a sufficient output can be secured even if the thickness of the battery is made as small as possible. It is also preferable for the bipolar secondary battery 10 to have a structure in which the power generating element 21 is sealed under reduced pressure in the laminate film 29 as a battery outer casing body and the positive electrode current collecting plate 25 and the negative electrode current collecting plate 27 are drawn to the outside of the laminate film 29 in order to prevent an impact from outside and environmental deterioration at the time of use. In addition, although the embodiments of the present invention are described herein by way of an example of a bipolar secondary battery, the type of a non-aqueous electrolyte secondary battery to which the present invention can be applied is not particularly limited. For example, the present invention can also be applied to any non-aqueous electrolyte secondary battery known in the art, such as a so-called parallel laminate type battery in which a power generating element is formed of single battery layers connected to each other in parallel.

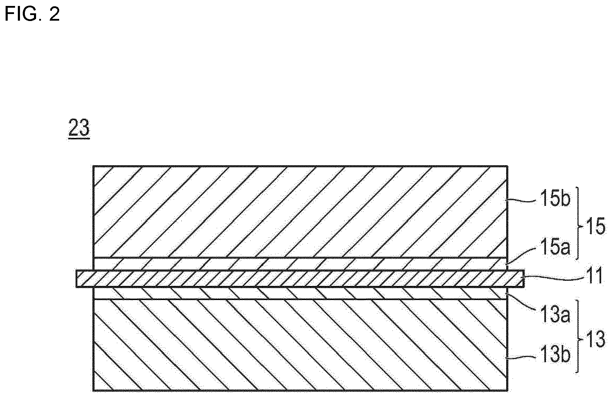

Fig. 2 is a schematic view illustrating one embodiment of the electrode of the present invention, which is used in the bipolar secondary battery shown in Fig. 1. In a bipolar electrode 23 shown in Fig. 2, a positive electrode active material layer 13 includes a first positive electrode active material layer 13a formed on one surface of a current collector 11 and a second positive electrode active material layer 13b formed on the first positive electrode active material layer 13a. Further, a negative electrode active material layer 15 includes a first negative electrode active material layer 15a formed on the other surface of the current collector 11 and a second negative electrode active material layer 15b formed on the first negative electrode active material layer 15a. In the electrode of the present embodiment, the first positive electrode active material layer 13a includes a binder in a crystallized state and the second positive electrode active material layer 13b does not substantially include a binder in a crystallized state. In addition, the first negative electrode active material layer 15a includes a binder in a crystallized state and the second negative electrode active material layer 15b does not substantially include a binder in a crystallized state.

With this configuration, it is possible to obtain an electrode for a non-aqueous electrolyte solution secondary battery, having an electrode active material layer, which is a thick film and suppresses the generation of cracks when the electrode is produced or the occurrence of collapse when the electrolyte solution is injected. In addition, with a non-aqueous electrolyte secondary battery using the electrode for a non-aqueous electrolyte solution secondary battery, input/output characteristics and cycle durability can be improved.

In the preparation of a non-aqueous electrolyte secondary battery in the related art, an electrode active material layer is manufactured by mixing an electrode active material, a binder, a dispersant, and the like to prepare a paste or a slurry, and applying the paste or the slurry, followed by drying and pressing. By this drying step, the crystallization of the binder proceeds, and further, a contact between the current collector and the electrode active material layer can be secured by pressing at a high pressure such as a roll press and the like. However, the present inventors have tried to manufacture a thick electrode active material layer by applying the method in order to increase the energy density of a battery, and thus, it was revealed that cracks are generated by the drying step. A reason therefor is considered to be the occurrence of thermal shrinkage of the electrode active material layer due to the crystallization of the binder.

Therefore, the present inventors have studied a method for producing an electrode active material layer without using a binder as a method for obtaining a thick electrode active material layer while not performing a drying step. However, according to the studies conducted by present inventors, it was found that sufficient cycle durability cannot be obtained with a battery using an electrode having an electrode active material layer obtained by such the method. In a process of studying a cause thereof, it was revealed that the cycle durability of the battery is sensitively affected by the constraint pressure of the battery when the cycle durability of the battery is measured by changing the constraint pressure of the battery. Further, it was found that the cycle durability of the battery is not affected much by the thickness of the electrode active material layer. That is, in a case where the binder is not used and the drying step is not carried out, the electrode active materials do not sufficiently adhere to each other, and therefore, it is difficult to suppress the spread of the electrode active material layers and the electrode active materials may collapse in some cases. Accordingly, the press cannot be performed at a high pressure such as a use of a roll press, and it is necessary to perform a surface press . As a result, it is considered that a battery having sufficient cycle durability cannot be obtained since a contact between the current collector and the electrode active material layer cannot be sufficiently obtained.

Therefore, the present inventors have conducted extensive studies in order to solve the problem. As a result, they have found that the problem can be solved by providing an electrode active material layer (first electrode active material layer) including a binder in a crystallized state between a current collector and an electrode active material layer not substantially including a binder in a crystallized state (second electrode active material layer). By providing the first electrode active material layer including a binder in a crystallized state on the current collector, it is possible to sufficiently lower a contact resistance between the current collector and the electrode active material layer by the effect of the binder. Further, since the electrode active materials are in contact with each other at an interface between the first electrode active material layer and the second electrode active material layer, the number of contact points is large and the contact area is large. For that reason, the contact resistance is low. Incidentally, since the interface of the first electrode active material layer and the interface of the second electrode active material layer have approximately the same degree of unevenness, a reduction in the resistance by an anchor effect is realized. By this reduction in the contact resistance, the battery resistance is reduced. As a result, the input/output characteristics of the battery are improved and the cycle durability is improved. In addition, since it is possible to achieve an increase in the thickness of the electrode by manufacturing the second electrode active material layer not substantially including a binder in a crystallized state, a battery having a high electrode occupation volume and a high capacity density can be obtained.

Hereinafter, the main constituent elements of the bipolar secondary battery of the present aspect will be described.

[Current Collector]

The current collector has a function of mediating electron transfer from one surface in contact with a positive electrode active material layer to the other surface in contact with a negative electrode active material layer. Although a material that constitutes the current collector is not particularly limited, for example, a metal or a resin with conductivity can be adopted.

Specific examples of the metal include aluminum, nickel, iron, stainless steel, titanium, copper, and the like. In addition to those, a clad material of nickel and aluminum, a clad material of copper and aluminum, a plating material of a combination of those metals, or the like can be preferably used. It may also be a foil obtained by coating aluminum on a metal surface or a carbon-coated aluminum foil. Among those, from the viewpoints of electron conductivity, a battery operating potential, adhesion of a negative electrode active material by sputtering to a current collector, and the like, aluminum, stainless steel, copper, or nickel is preferable.

Furthermore, examples of the latter resin having conductivity include a resin formed by adding a conductive filler to a conductive polymer material or a non-conductive polymer material, as necessary. Examples of the conductive polymer material include polyaniline, polypyrrole, polythiophene, polyacetylene, polyparaphenylene, polyphenylene vinylene, polyacrylonitrile, polyoxadiazole, and the like. These conductive polymer materials are advantageous in terms of easiness of a production step or reduction in the weight of the current collector since the conductive polymer materials have sufficient conductivity even without addition of a conductive filler.

Examples of the non-conductive polymer material include polyethylene (PE; high density polyethylene (HDPE), low density polyethylene (LDPE) and the like), polypropylene (PP), polyethylene terephthalate (PET), polyether nitrile (PEN), polyimide (PI), polyamideimide (PAI), polyamide (PA), polytetrafluoroethylene (PTFE), styrene-butadiene rubber (SBR), polyacrylonitrile (PAN), polymethyl acrylate (PMA), polymethyl methacrylate (PMMA), polyvinyl chloride (PVC), polyvinylidene fluoride (PVdF), polystyrene (PS), and the like. Such non-conductive polymer materials can have excellent voltage resistance or solvent resistance.

A conductive filler can be added to the conductive polymer material or the non-conductive polymer material, as necessary. In particular, in a case where a resin serving as a base material of the current collector includes only a non-conductive polymer, a conductive filler is necessarily indispensable in order to impart conductivity to the resin.

As the conductive filler, any material having conductivity can be used without particular limitation. Examples of the material having excellent conductivity, potential resistance, or lithium ion shielding properties include a metal, a conductive carbon, and the like. The metal is not particularly limited, but it is preferable that the metal includes at least one metal selected from the group consisting of Ni, Ti, Al, Cu, Pt, Fe, Cr, Sn, Zn, In, Sb, and K, or an alloy or metal oxide including such the metal. Further, the conductive carbon is not particularly limited. It is preferable that the conductive carbon includes at least one selected from the group consisting of acetylene black, VULCAN (registered trademark), BLACK PEARL (registered trademark), carbon nanofiber, Ketjen black (registered trademark), carbon nanotube, carbon nanohorn, carbon nanobaloon, and fullerene.

The amount of the conductive filler to be added is not particularly limited as long as it can impart sufficient conductivity to the current collector, and is generally approximately 5 to 80% by mass.

Furthermore, the current collector may have a single-layer structure formed of a single material or a laminate structure in which layers composed for those materials are suitably combined. From the viewpoint of reduction in the weight of the current collector, it is preferable to include a conductive resin layer formed of at least a resin having conductivity. In addition, from the viewpoint of blocking the transfer of lithium ions between the single battery layers, a metal layer may be disposed on a part of the current collector.

[Second Electrode Active Material Layer (Positive Electrode Active Material Layer or Negative Electrode Active Material Layer)]

The second electrode active material layer (the positive electrode active material layer or the negative electrode active material layer) includes a second electrode active material (a positive electrode active material or a negative electrode active material) and does not substantially include a binder in a crystallized state. Further, the second electrode active material layer can include a conductive aid, an ion conductive polymer, a lithium salt and the like, if necessary. In addition, in the present invention, the second electrode active material may be configured to be coated with a coating agent including a coating resin, and if necessary, a conductive aid.

Moreover, in the present specification, the electrode active material particle in the state of being coated with the coating agent is also referred to as a "coated electrode active material particle". The coated electrode active material particle has a core-shell structure in which a shell part formed of a coating resin, and if necessary, a coating agent including a conductive aid is formed on a surface of a core part formed of an electrode active material.

(Positive Electrode Active Material)

Examples of the positive electrode active material include a lithium-transition metal composite oxide such as $LiMn_2O_4$, $LiCoO_2$, $LiNiO_2$, $Li(Ni-Mn-Co)O_2$, or a compound in which some of these transition metals are replaced by other elements, a lithium-transition metal phosphate compound, a lithium-transition metal sulfate compound, and the like. Two or more positive electrode active materials may be used in combination in some cases. The lithium-transition metal composite oxide is preferably used as the positive electrode active material from the viewpoint of capacity and output characteristics. A composite oxide containing lithium and nickel is more preferably used. $Li(Ni-Mn-Co)O_2$ and a compound in which some of these transition metals are replaced by other elements (hereinafter also simply referred to as an "NMC composite oxide"), a lithium-nickel-cobalt-aluminum composite oxide (hereinafter also simply referred to as an "NCA composite oxide"), or the like is more preferably used. The NMC composite oxide has a layered crystal structure in which a lithium atom layer and a transition metal (Mn, Ni, and Co are orderly arranged) atomic layer are alternately laminated via an oxygen atom layer. In addition, one Li atom is included per atom of a transition metal M, and the amount of Li that can be taken out is twice that of a spinel-based lithium manganese oxide, that is, a supply capacity is doubled, and the capacity can thus be high.

As described above, the NMC composite oxide also includes composite oxides in which some of the transition metal elements are replaced by other elements. Examples of the other elements in this case include Ti, Zr, Nb, W, P, Al, Mg, V, Ca, Sr, Cr, Fe, B, Ga, In, Si, Mo, Y, Sn, V, Cu, Ag, Zn, and the like; Ti, Zr, Nb, W, P, Al, Mg, V, Ca, Sr, or Cr is preferable; Ti, Zr, P, Al, Mg, or Cr is more preferable; and Ti, Zr, Al, Mg, or Cr is even still more preferable from the viewpoint of improving the cycle characteristics.

Since the NMC composite oxide has a high theoretical discharge capacity, it preferably satisfies General Formula (1) : LiaNibMncCodMxO$_2$ (in which a, b, c, d, and x satisfy $0.9 \leq a \leq 1.2$, $0 < b < 1$, $0 < c \leq 0.5$, $0 < d \leq 0.5$, $0 \leq x \leq 0.3$, and b + c + d = 1; and M is at least one element selected from the group consisting of Ti, Zr, Nb, W, P, Al, Mg, V, Ca, Sr, and Cr) . Here, a represents the atomic ratio of Li, b represents the atomic ratio of Ni, c represents the atomic ratio of Mn, d represents the atomic ratio of Co, and x represents the atomic ratio of M. In General Formula (1), $0.4 \leq b \leq 0.6$ is preferably satisfied from the viewpoint of cycle characteristics. In addition, the composition of each element can be measured by, for example, inductively coupled plasma (ICP) emission spectrometry.

In general, it is known that nickel (Ni), cobalt (Co), and manganese (Mn) contribute to capacity and output characteristics from the viewpoints of improving the purity of a material and improving the electron conductivity. Some of the transition metals in a crystal lattice are replaced by Ti and the like. Some of atoms of a transition metal element are preferably replaced by atoms of other elements from the viewpoint of cycle characteristics, and $0 < x \leq 0.3$ is particularly preferably satisfied in General Formula (1) . Due to the solid solution of at least one selected from the group consisting of Ti, Zr, Nb, W, P, Al, Mg, V, Ca, Sr, and Cr, the crystal structure is stabilized, and as a result, it is considered that reduction in capacity of the battery can be prevented even after repeated charge/discharge, and thus, excellent cycle characteristics can be achieved.

As a more preferable embodiment, in General Formula (1), b, c, and d preferably satisfy $0.44 \leq b \leq 0.51$, $0.27 \leq c \leq 0.31$, and $0.19 \leq d \leq 0.26$ from the viewpoint of improving a balance between the capacity and the life characteristics. For example, LiNi$_{0.5}$Mn$_{0.3}$CO$_{0.2}$O$_2$ has a larger capacity per unit weight than LiCoO$_2$, LiMn$_2$O$_4$, LiNi$_{1/3}$Mn$_{1/3}$Co$_{1/3}$O$_2$, or the like which has been proven to be satisfactory in a general consumer-use battery. This makes it possible to improve the energy density and brings about an advantage that a compact and high-capacity battery can be manufactured, and thus, it is preferable, also from the viewpoint of a cruising distance. LiNi$_{0.8}$Co$_{0.1}$Al$_{0.1}$O$_2$ is more advantageous in terms of larger capacity, but has a problem in the life characteristics. In contrast, LiNi$_{0.5}$Mn$_{0.3}$Co$_{0.2}$O$_2$ has excellent life characteristics similar to LiNi$_{1/3}$Mn$_{1/3}$Co$_{1/3}$O$_2$.

Incidentally, it is certain that a positive electrode active material other than the above-mentioned materials may be used. The average particle diameter of the positive electrode active material is not particularly limited, but the average particle diameter of the second positive electrode active material contained in the second positive electrode active material layer is preferably 1 to 100 $\mu$m, and more preferably 1 to 20 $\mu$m from the viewpoint of a high output.

(Negative Electrode Active Material)

Examples of the negative electrode active material include a carbon material such as graphite, soft carbon, hard carbon, and the like, a lithium-transition metal composite oxide (for example, Li$_4$Ti$_5$O$_{12}$), a metal material (tin, silicon), a lithium alloy-based negative electrode material (for example, a lithium-tin alloy, a lithium-silicon alloy, a lithium-aluminum-manganese alloy, and the like), etc. In some cases, two or more kinds of the negative electrode active materials may be used in combination. Preferably, the carbon material, the lithium-transition metal composite oxide, or the lithium alloy-based negative electrode material is used preferably as the negative electrode active material from the viewpoint of the capacity and the output characteristics. The negative electrode active material other than the above materials can be used. In addition, the above-mentioned coating resin has a property of being easily attached to a carbon material. Therefore, it is preferable to use the carbon material as the negative electrode active material from the viewpoint of providing a structurally stable electrode material.

The average particle diameter of the negative electrode active material is not particularly limited, but the average particle diameter of the second negative electrode active material contained in the second negative electrode active material layer is preferably 1 to 100 $\mu$m, and more preferably 1 to 20 $\mu$m from the viewpoint of a high output.

(Conductive Aid)

A conductive aid has a function of forming an electron conductive path (conductive path) in the electrode active material layer. When such an electron conductive path is formed in the electrode active material layer, the internal resistance of the battery is reduced and thus, can contribute to improvement of the output characteristics at a high rate. In particular, it is preferable that at least a part of the conductive aid forms a conductive path electrically connecting two principal surfaces of the electrode active material layer (in the present embodiment, the first principal surface in contact with the electrolyte layer side of the electrode active material layer and the second principal surface in contact with the current collector side are electrically connected with each other). By having such a form, the electron transfer resistance in a thickness direction in the electrode active material layer is further reduced, so that the output characteristics at a high rate of the battery may be further improved. Furthermore, whether or not at least a part of the conductive aid forms a conductive path electrically connecting two principal surfaces of the electrode active material layer (in the present embodiment, the first principal surface in contact with the electrolyte layer side of the electrode active material layer and the second principal surface in contact with the current collector side are electrically connected with each other) can be confirmed by observing a cross-section of the electrode active material layer using an SEM or an optical microscope.

It is preferable that the conductive aid is a conductive fiber having a fibrous form from the viewpoint that it is secured to form such a conductive path. Specific examples of the conductive aid include a carbon fiber such as a PAN-based carbon fiber, a pitch-based carbon fiber, and the like; a conductive fiber obtained by uniformly dispersing a metal or graphite having good conductivity in a synthetic fiber; a metal fiber obtained by fibrillization of a metal such as stainless steel; a conductive fiber obtained by coating a surface of an organic fiber with a metal; a conductive fiber obtained by coating the surface of an organic fiber with a resin including a conductive material; and the like. Among those, the carbon fiber is preferable since it has excellent conductivity and light weight.

However, a conductive aid having no fibrous form may also be used. For example, a conductive aid having a particulate form (for example, a spherical from) can be used. In a case where the conductive aid is particulate, the shape of the particle is not particularly limited, and may be any shape of powdery, spherical, planar, columnar, amorphous, phosphatoid, and spindle-like shapes, and other shape. The average particle diameter (primary particle diameter) in a case where the conductive aid is particulate is not particularly limited, but is preferably approximately 0.01 to 10 $\mu$m from the viewpoint of electric characteristics of the battery. Furthermore, in the present specification, the "particle diameter" means the maximum distance L between two arbitrary points on the contour line of the conductive aid. As the value of the "average particle diameter", a value calculated as an average value of the particle diameters of the particles observed within several views to several tens views using an observation means such as a scanning electron microscope (SEM), a transmission electron microscope (TEM), and the like is intended to be adopted.

Examples of the conductive aid having a particulate form (for example, a spherical form) include metals such as aluminum, stainless steel (SUS), silver, gold, copper, titanium, and the like, and an alloy or metal oxide containing such metals; a carbon such as a carbon nanotube (CNT), carbon black (specifically acetylene black, Ketjen black (registered trademark), furnace black, channel black, thermal lamp black, and the like); etc., but are not limited thereto. In addition, a material obtained by coating a periphery of a particulate ceramic material or a resin material with the metal material by plating or the like can also be used as the conductive aid. Among those conductive aids, a material including at least one selected from the group consisting of aluminum, stainless steel, silver, gold, copper, titanium, and carbon is preferable, a material containing at least one selected from the group consisting of aluminum, stainless steel, silver, gold, and carbon is more preferable, and a material including at least one kind of carbon is still more preferable from the viewpoint of electrical stability. These conductive aids may be used alone or in combination of two or more kinds thereof.

The content of the conductive aid in the second electrode active material layer is preferably 2 to 20% by mass with respect to 100% by mass of the total amount of the solid contents (a total solid content of all members) of the second electrode active material layer. If the content of the conductive aid is within the range, there are advantages that the electron conductive path can be formed well in the electrode active material layer and a reduction in the energy density of the battery can also be suppressed. If the content of the conductive aid is within the range, there are advantages that an electron conductive path can be favorably formed in the second electrode active material layer and a reduction in the energy density of the battery can be suppressed. Here, the content of the conductive aid refers to a content of the conductive aid other than those included in the coating agent which will be described later.

As one preferred embodiment of the present invention, an aspect in which at least a part of the surface of the second electrode active material is coated with a coating agent including a coating resin and a conductive aid may be mentioned. In such an aspect, the conductive aid included in the coating agent forms an electron conductive path in the coating agent and reduces the electron transfer resistance of the electrode active material layer, leading to contribution to an improvement of output characteristics at a high rate of the battery. The electrode active material coated with the coating agent is simply referred to as a "coated electrode active material". Hereinafter, specific configurations of such embodiments will be described with a focus on the coating agent.

(Coating Agent)

The coating agent includes a coating resin, and a conductive aid, as necessary. By allowing the coating agent to be present on the surface of the electrode active material, it is possible to secure an ion conductive path from the surface of the electrode active material to the electrolyte layer and an electron conductive path from the surface of the electrode active material to the current collector in the electrode active material layer.

(Coating Resin)

The coating resin exists on the surface of the electrode active material and has a function of absorbing and holding an electrolyte solution. Thus, an ion conductive path from the surface of the electrode active material to the electrolyte layer can be formed in the electrode active material layer.

In the bipolar secondary battery of the present aspect, a material of the coating resin is not particularly limited, but it is preferable that the material includes at least one selected from the group consisting of (A) a polyurethane resin and (B) a polyvinyl resin from the viewpoint of flexibility and liquid absorption.

(A) Polyurethane Resin

Since the polyurethane resin has high flexibility (high tensile elongation at break) and urethane bonds form a strong hydrogen bond mutually, it is possible to constitute a coating agent which has excellent flexibility and is structurally stable by using the polyurethane resin as a coating resin.

A specific form of the polyurethane resin is not particularly limited, and appropriate reference can be made to findings conventionally known about the polyurethane resin. The polyurethane resin may be composed of a polyisocyanate component (a1) and a polyol component (a2), and an ionic group introducing component (a3), an ionic group neutralizer component (a4), and a chain extender component (a5), as necessary, may be further used.

Examples of the polyisocyanate component (a1) include a diisocyanate compound having two isocyanate groups in one molecule and a polyisocyanate compound having three or more isocyanate groups in one molecule as. These may be used alone or in combination of two or more kinds thereof.

Examples of the diisocyanate compounds include aromatic diisocyanates such as 4,4'-diphenylmethane diisocyanate (MDI), 2,4- and/or 2,6-tolylene diisocyanate, p-phenylene diisocyanate, xylylene diisocyanate, 1,5-naphthalene diisocyanate, 3,3'-dimethyldiphenyl-4,4'-diisocyanate, dianisidine diisocyanate, tetramethylxylylene diisocyanate, and the like; alicyclic diisocyanates such as isophorone diisocyanate, dicyclohexylmethane-4,4'-diisocyanate, trans-1,4-cyclohexyl diisocyanate, norbornene diisocyanate, and the like; and aliphatic diisocyanates such as 1,6-hexamethylene diisocyanate, 2,2,4 and/or (2,4,4)-trimethylhexamethylene diisocyanate, lysine diisocyanate, and the like.

Such diisocyanate compound may be used in the form of a modified product from carbodiimide modification, isocyanurate modification, biuret modification, or the like, or may be used in the form of a blocked isocyanate blocked by various blocking agents.

Examples of the polyisocyanate compound having three or more isocyanate groups in one molecule include the above-exemplified isocyanurate trimers, biuret trimers, trimethylolpropane adducts of the diisocyanate, and the like; trifunctional or more isocyanate such as triphenylmethane triisocyanate, 1-methylbenzole-2,4,6-triisocyanate, dimethyl triphenylmethane tetraisocyanate, and the like; etc., and these isocyanate compounds may be used in the form of a modified product from carbodiimide modification, isocyanurate modification, biuret modification, or the like, or may be used in the form of a blocked isocyanate blocked by various blocking agents.

Examples of the polyol component (a2) includes a diol compound having two hydroxyl groups in one molecule and a polyol compound having three or more hydroxyl groups in one molecule, and these may be used alone or in combination of two or more kinds thereof.

Examples of the diol compound and the polyol compound having three or more hydroxyl groups in one molecule include low-molecular-weight polyols, polyether polyols, polyester polyols, polyester polycarbonate polyols, crystalline or amorphous polycarbonate polyols, polybutadiene polyols, and silicone polyols.

Examples of the low-molecular-weight polyols include aliphatic diols such as ethylene glycol, 1,2-propanediol, 1,3-propanediol, 2-methyl-1,3-propanediol, 2-butyl-2-ethyl-1,3-propanediol, 1,4-butanediol, neopentyl glycol, 3-methyl-2,4-pentanediol, 2,4-pentanediol, 1,5-pentanediol, 3-methyl-1,5-pentanediol, 2-methyl-2,4-pentanediol, 2,4-diethyl-1,5-pentanediol, 1,6-hexanediol, 1,7-heptanediol, 3,5-heptanediol, 1,8-octanediol, 2-methyl-1,8-octanediol, 1,9-nonanediol, 1,10-decanediol, and the like; alicyclic diols such as cyclohexanedimethanol, cyclohexanediol, and the like; and trihydric or higher polyols such as trimethylolethane, trimethylolpropane, hexitols, pentitols, glycerin, polyglycerin, pentaerythritol, dipentaerythritol, tetramethylolpropane, and the like.

Examples of the polyether polyols include ethylene oxide adducts such as diethylene glycol, triethylene glycol, tetraethylene glycol, polyethylene glycol, and the like; propylene oxide adducts such as dipropylene glycol, tripropylene glycol, tetrapropylene glycol, and polypropylene glycol; and polypropylene glycol; ethylene oxide and/or propylene oxide adducts of the low molecular weight polyols as described above; polytetramethylene glycol; and the like.

The polyester polyols include, for example, a polyester polyol obtained by direct esterification and/or ester-exchange reaction of a polyol such as the above low-molecular-weight polyols with a less than stoichiometric quantity of a polycarboxylic acid or an ester-forming derivative (ester, anhydride, halide, and the like) of the polycarboxylic acid and/or a lactone or a hydroxycarboxylic acid obtained by ring-opening hydrolysis of the lactone. The polycarboxylic acid or an ester-forming derivative thereof includes, for example, polycarboxylic acid such as aliphatic dicarboxylic acids such as oxalic acid, malonic acid, succinic acid, glutaric acid, adipic acid, pimelic acid, suberic acid, azelaic acid, sebacic acid, dodecanedioic acid, 2-methylsuccinic acid, 2-methyladipic acid, 3-methyladipic acid, 3-methylpentanedioic acid, 2-methyloctanedioic acid, 3,8-dimethyldecanedioic acid, 3,7-dimethyldecanedioic acid, hydrogenated dimer acid, and dimer acid; aromatic dicarboxylic acids such as phthalic acid, terephthalic acid, isophthalic acid, and naphthalenedicarboxylic acid; alicyclic dicarboxylic acids such as cyclohexanedicarboxylic acid; tricarboxylic acids such as trimellitic acid, trimesic acid, and trimer of castor oil fatty acid; and tetracarboxylic acids such as pyromellitic acid. The ester-forming derivatives of the polycarboxylic acids include anhydrides of the polycarboxylic acids, halides such as chlorides and bromides of the polycarboxylic acids, lower aliphatic esters such as methyl, ethyl, propyl, isopropyl, butyl, isobutyl, and amyl esters of the polycarboxylic acids. The lactones include $\gamma$-caprolactone, $\delta$-caprolactone, $\varepsilon$-caprolactone, dimethyl-s-caprolactone, $\delta$-valerolactone, $\gamma$-valerolactone, $\gamma$-butyrolactone, and the like.

Examples of the ionic group introducing component (a3) used as necessary include an anionic group introducing component and a cationic group introducing component. Examples of the anionic group introducing component include carboxyl group-containing polyols such as dimethylolpropionic acid, dimethylolbutanoic acid, dimethylolbutyric acid, dimethylolvaleric acid, and the like; and sulfonic acid group-containing polyols such as 1,4-butanediol-2-sulfonic acid and the like, and examples of the cationic group introducing component include N,N-dialkylalkanolamines, N-alkyl-N,N-dialkanolamines such as N-methyl-N,N-diethanolamine, N-butyl-N,N-diethanolamine, and the like, and trialkanolamines.

Examples of the ionic group neutralizer component (a4) include tertiary amine compounds including trialkylamines such as trimethylamine, triethylamine, tributylamine, and the like, N,N-dialkylalkanolamines such as N,N-dimethylethanolamine, N,N-dimethylpropanolamine, N,N-dipropylethanolamine 1-dimethylamino-2-methyl-2-propanol, and the like, N-alkyl-N,N-dialkanolamines, trialkanolamines such as triethanolamine and the like, etc.; and basic compounds such as ammonia, trimethylammonium hydroxide, sodium hydroxide, potassium hydroxide, lithium hydroxide, and the like, and examples of the ionic group neutralizer include organic carboxylic acids such as formic acid, acetic acid, lactic acid, succinic acid, glutaric acid, citric acid, and the like; organic sulfonic acids such as para-toluenesulfonic acid, alkyl sulfonate, and the like; inorganic acids such as hydrochloric acid, phosphoric acid, nitric acid, sulfuric acid, and the like; epoxy compounds such as epihalohydrin and the like; and quaternizing agents such as dialkyl sulfate, alkyl halide, and the like.

As the chain extender component (a5) used as necessary, well-known chain extenders may be used alone or in combination of two or more kinds thereof, and a diamine compound, a polyhydric primary alcohol, or the like is preferable, and a polyhydric amine compound is more preferable. Examples of the polyhydric amine compound include low-molecular-weight diamines such as ethylenediamine, propylenediamine, and the like, with a structure in which alcoholic hydroxyl groups of the above-exemplified low-molecular-weight diols are substituted with amino groups; polyetherdiamines such as polyoxypropylenediamine, polyoxyethylenediamine, and the like; alicyclic diamines such as menthenediamine, isophoronediamine, norbornenediamine, bis(4-amino-3-methyldicyclohexyl)methane, diaminodicyclohexylmethane, bis(amino-methyl)cyclohexane, 3,9-bis(3-aminopropyl)-2,4,8,10-tetraoxaspiro(5,5)undecane, and the like; aromatic diamines such as m-xylenediamine, $\alpha$-(m/p-aminophenyl)ethylamine, m-phenylenediamine, diaminodiphenylmethane, diaminodiphenylsulfone, diaminodiethyldimethyldiphenylmethane, diaminodiethyldiphenylmethane, dimethylthiotoluenediamine, diethyltoluenediamine, $\alpha,\alpha$'-bis(4-aminophenyl)-p-diisopropylbenzene, and the like; hydrazine; and dicarboxylic acid dihydrazide compounds which are compounds with dicarboxylic acid and hydrazine, exemplified as a polycarboxylic acid used for the polyester polyols.

Among the respective components as described above, as the polyisocyanate component (a1), a diisocyanate compound is preferably used, 4,4'-diphenylmethane diisocyanate (MDI), 2,4'-diphenylmethane diisocyanate, 4,4'-dicyclohexyl methane diisocyanate, 1,4-cyclohexane diisocyanate, 2,4-toluene diisocyanate, 1,6-hexamethylene diisocyanate, or the like is particularly preferably used, and 4,4'-diphenylmethane diisocyanate (MDI) is most preferably used. Furthermore, as the polyol component (a2), an ethylene oxide adduct which is a diol compound is preferably used as an essential component, and polyethylene glycol is particularly preferably used as an essential component. Since polyethylene glycol has excellent lithium ion conductivity, such a configuration makes it possible to remarkably exhibit an effect of lowering (suppressing an increase in) internal resistance of the battery. Here, a number average molecular weight calculated from a hydroxyl value of polyethylene glycol is not particularly limited, but is preferably 2,500 to 15,000, more preferably 3,000 to 13,000, and still more preferably 3,500 to 10,000. Incidentally, it is preferable to further use ethylene glycol and/or glycerin as a polyol component in addition to the above-described essential components from the viewpoint of excellent heat resistance. In particular, if only ethylene glycol is used while not using glycerin, a gel obtained by swelling of the coating resin is a physically crosslinked gel, and therefore, it can be dissolved in a solvent in the preparation and various production methods as described later can be applied. On the other hand, if glycerin is used in addition to ethylene glycol, the main chains of a polyurethane resin are chemically crosslinked with each other, and in this case, there is an advantage that a degree of swelling to an electrolyte solution can be arbitrarily controlled by controlling a molecular weight between the crosslinks.

In addition, a method for synthesizing the polyurethane resin is not particularly limited and appropriate reference can be made to findings conventionally known.

(B) Polyvinyl-Based Resin

Since the polyvinyl resin has high flexibility (high tensile elongation at break as described later), it is possible to mitigate a volume change of the active material accompanying the charging and discharging reaction and suppress the expansion of the active material layer by using the polyvinyl resin as a coating resin.

A specific form of the polyvinyl resin is not particularly limited, and appropriate reference can be made to findings conventionally known as long as the polyurethane resin is a polymer obtained by polymerization of monomers including a polymerizable unsaturated bond (hereinafter also referred to as a "vinyl monomer").

In particular, as the vinyl monomer, a vinyl monomer (b1) having a carboxy group and a vinyl monomer (b2) represented by the following General Formula (1) are preferably included.

[Chem. 1]

$$CH_2=C(R^1)COOR^2 \qquad (1)$$

In Formula (1), $R^1$ is a hydrogen atom or a methyl group, and $R^2$ is a linear alkyl group having 1 to 4 carbon atoms or a branched alkyl group having 4 to 36 carbon atoms.

The vinyl monomer (b1) having a carboxyl group is a monocarboxylic acid having 3 to 15 carbon atoms, such as methacrylic acid, crotonic acid, cinnamic acid, and the like; a dicarboxylic acid having 4 to 24 carbon atoms, such as maleic acid (anhydride), fumaric acid (anhydride), itaconic acid (anhydride), citraconic acid, mesaconic acid, and the like; a tri- or tetravalent or higher polycarboxylic acid having 6 to 24 carbon atoms, such as aconitic acid and the like; etc. Among those, the (meth) acrylic acid is preferable, and methacrylic acid is particularly preferable.

In the vinyl monomer (b2) represented by General Formula (1), $R^1$ represents a hydrogen atom or a methyl group. $R^1$ is preferably the methyl group.

$R^2$ is a linear alkyl group having 1 to 4 carbon atoms or a branched alkyl group having 4 to 36 carbon atoms, and Specific examples of $R^2$ include a methyl group, an ethyl group, a propyl group, a 1-alkylalkyl group (a 1-methylpropyl group (sec-butyl group), a 1,1-dimethylethyl group (tert-butyl group), a 1-methylbutyl group, a 1-ethylpropyl group, a 1,1-dimethylpropyl group, a 1-methylpentyl group, a 1-ethylbutyl group, a 1-methylhexyl group, a 1-ethylpentyl group, a 1-methylheptyl group, a 1-ethylhexyl group, a 1-methyloctyl group, a 1-ethylheptyl group, a 1-methylnonyl group, a 1-ethyloctyl group, a 1-methyldecyl group, a 1-ethyl nonyl group, a 1-butyl eicosyl group, a 1-hexyloctadecyl group, a 1-octylhexadecyl group, a 1-decyltetradecyl group, a 1-undecyltridecyl group, and the like), a 2-alkylalkyl group (a 2-methylpropyl group (iso-butyl group), a 2-methylbutyl group, a 2-ethylpropyl group, a 2,2-dimethylpropyl group, a 2-methylpentyl group, a 2-ethylbutyl group, a 2-methylhexyl group, a 2-ethylpentyl group, a 2-methylheptyl group, a 2-ethylhexyl group, a 2-methyloctyl group, a 2-ethylheptyl group, a 2-methylnonyl group, a 2-ethyloctyl group, a 2-methyldecyl group, a 2-ethylnonyl group, a 2-hexyloctadecyl group, a 2-octylhexadecyl group, a 2-decyltetradecyl group, a 2-undecyltridecyl group, a 2-dodecylhexadecyl group, a 2-tridecylpentadecyl group, a 2-decyloctadecyl group, a 2-tetradecyloctadecyl group, a 2-hexadecyloctadecyl group, a 2-tetradecyleicosyl group, a 2-hexadecyleicosyl group, or the like), 3- to 34-alkylalkyl groups (a 3-alkylalkyl group, a 4-alkylalkyl group, a 5-alkylalkyl group, a 32-alkylalkyl group, a 33-alkylalkyl group, a 34-alkylalkyl group, and the like) ; mixed alkyl groups containing one or more branched alkyl groups such as residues of oxo alcohols produced corresponding to propylene oligomers (from heptamers to undecamers), ethylene/propylene (molar ratio of 16/1 to 1/11) oligomers, isobutylene oligomers (from heptamers to octamers), $\alpha$-olefin (having 5 to 20 carbon atoms) oligomers (from tetramers to octamers), or the like; etc.

Among those, from the viewpoint of liquid absorption of an electrolyte solution, the methyl group, the ethyl group, or the 2-alkylalkyl group is preferable, and the 2-ethylhexyl group and the 2-decyltetradecyl group are more preferable.

Moreover, the monomers constituting the polymer may also include a copolymerizable vinyl monomer (b3) containing no active hydrogen, in addition to the vinyl monomer (b1) having a carboxyl group and the vinyl monomer (b2) represented by General Formula (1).

Examples of the copolymerizable vinyl monomer (b3) containing no active hydrogen include the following (b31) to (b35).

(b31) Hydrocarbyl (Meth)Acrylate Formed from Monools Having 1 to 20 Carbon Atoms and (Meth)Acrylic acid

Examples of the monool include (i) aliphatic monools [methanol, ethanol, n- or i-propyl alcohol, n-butyl alcohol, n-pentyl alcohol, n-octyl alcohol, nonyl alcohol, decyl alcohol, lauryl alcohol, tridecyl alcohol, myristyl alcohol, cetyl alcohol, stearyl alcohol, and the like]; (ii) alicyclic monools [cyclohexyl alcohol and the like]; (iii) araliphatic monools [benzyl alcohol, and the like]; and mixtures of two or more thereof.

(b32) Poly(n = 2 to 30)Oxyalkylene (Having 2 to 4 Carbon Atoms) Alkyl (Having 1 to 18 Carbon Atoms) Ether (Meth) Acrylates [(meth) acrylate of ethylene oxide (hereinafter abbreviated as EO) (10 mol) adduct of methanol, (meth)acrylate of propylene oxide (hereinafter abbreviated as PO) (10 mol) adduct of methanol, and the like]

(b33) Nitrogen-Containing Vinyl Compounds

(b33-1) Amide Group-Containing Vinyl Compounds

(i) (Meth) acrylamide compounds having 3 to 30 carbon atoms, for example, N,N-dialkyl (having 1 to 6 carbon atoms) or diaralkyl (having 7 to 15 carbon atoms) (meth)acrylamides [N,N-dimethylacrylamide, N,N-dibenzylacrylamide, and the like], and diacetone acrylamide
(ii) Amide group-containing vinyl compounds having 4 to 20 carbon atoms excluding the above (meth)acrylamide compounds, for example, N-methyl-N-vinylacetamide, cyclic amides (pyrrolidone compounds (having 6 to 13 carbon atoms, for example, N-vinyl pyrrolidone and the like)).

(b33-2) (Meth)Acrylate Compounds

(i) Dialkyl (having 1 to 4 carbon atoms) aminoalkyl (having 1 to 4 carbon atoms) (meth)acrylates [N,N-dimethylaminoethyl (meth)acrylate, N,N-diethylaminoethyl (meth)acrylate, t-butylaminoethyl (meth)acrylate, morpholinoethyl (meth)acrylate, and the like]
(ii) Quaternary ammonium group-containing (meth)acrylates [quaternary compounds obtained by quaternizing tertiary amino group-containing (meth)acrylates [N,N-dimethylaminoethyl (meth)acrylate, N,N-diethylaminoethyl (meth)acrylate, and the like] with a quaternizing agent (a quaternary product obtained by using the quaternizing agent), and the like]

(b33-3) Heterocyclic Ring-Containing Vinyl Compounds

Pyridine compounds (having 7 to 14 carbon atoms, for example, 2- or 4-vinyl pyridine), imidazole compounds (having 5 to 12 carbon atoms, for example, N-vinyl imidazole), pyrrole compounds (having 6 to 13 carbon atoms, for example, N-vinyl pyrrole), and pyrrolidone compounds (having 6 to 13 carbon atoms, for example, N-vinyl-2-pyrrolidone)

(b33-4) Nitrile Group-Containing Vinyl Compounds

Nitrile group-containing vinyl compounds having 3 to 15 carbon atoms, for example, (meth)acrylonitrile, cyanostyrene, and cyanoalkyl (having 1 to 4 carbon atoms) acrylate

(b33-5) Other Nitrogen-Containing Vinyl Compounds

Nitro group-containing vinyl compounds (having 8 to 16 carbon atoms, for example, nitrostyrene) and the like

(b34) Vinyl Hydrocarbons

(b34-1) Aliphatic Vinyl Hydrocarbons

Olefins having 2 to 18 carbon atoms or more [ethylene, propylene, butene, isobutylene, pentene, heptene, diisobutylene, octene, dodecene, octadecene, and the like], dienes having 4 to 10 carbon atoms or more [butadiene, isoprene, 1,4-pentadiene, 1,5-hexadiene, 1,7-octadiene, and the like], and the like

(b34-2) Alicyclic Vinyl Hydrocarbons

Cyclic unsaturated compounds having 4 to 18 carbon atoms or more, for example, cycloalkene (for example, cyclohexene), (di)cycloalkadiene [for example, (di)cyclopentadiene], and terpene (for example, pinene, limonene, and indene)

(b34-3) Aromatic Vinyl Hydrocarbons

Aromatic unsaturated compounds having 8 to 20 carbon atoms or more, for example, styrene, $\alpha$-methyl styrene, vinyl toluene, 2,4-dimethyl styrene, ethyl styrene, isopropyl styrene, butyl styrene, phenyl styrene, cyclohexyl styrene, and benzyl styrene

(b35) Vinyl Esters, Vinyl Ethers, Vinyl Ketones, and Unsaturated Dicarboxylic Acid Diesters

(b35-1) Vinyl Esters

Aliphatic vinyl esters [having 4 to 15 carbon atoms, for example, alkenyl esters of aliphatic carboxylic acid (mono- or dicarboxylic acid) (for example, vinyl acetate, vinyl propionate, vinyl butyrate, diallyl adipate, isopropenyl acetate, and vinyl methoxy acetate)], aromatic vinyl esters [having 9 to 20 carbon atoms, for example, alkenyl esters of aromatic carboxylic acid (mono- or dicarboxylic acid) (for example, vinyl benzoate, diallyl phthalate, methyl-4-vinyl benzoate), and aromatic ring-containing esters of aliphatic carboxylic acid (for example, acetoxystyrene)]

(b35-2) Vinyl Ethers

Aliphatic vinyl ethers [having 3 to 15 carbon atoms, for example, vinyl alkyl (having 1 to 10 carbon atoms) ether (vinyl methyl ether, vinyl butyl ether, vinyl 2-ethylhexyl ether, and the like), vinyl alkoxy (having 1 to 6 carbon atoms) alkyl (having 1 to 4 carbon atoms) ethers (vinyl-2-methoxyethyl ether, methoxybutadiene, 3,4-dihydro-1,2-pyran, 2-butoxy-2'-vinyloxy diethyl ether, vinyl-2-ethylmercapto ethyl ether, and the like), and poly(2 to 4) (meth)allyloxyalkane (having 2 to 6 carbon atoms) (diallyloxyethane, triallyloxyethane, tetraallyloxybutane, and tetramethallyloxyethane, and the like)]
Aromatic vinyl ethers (having 8 to 20 carbon atoms, for example, vinyl phenyl ether and phenoxystyrene)

(b35-3) Vinyl Ketones

Aliphatic vinyl ketones (having 4 to 25 carbon atoms, for example, vinyl methyl ketone and vinyl ethyl ketone), aromatic vinyl ketones (having 9 to 21 carbon atoms, for example, vinyl phenyl ketone)

(b35-4) Unsaturated Dicarboxylic Acid Diesters

Unsaturated dicarboxylic acid diesters having 4 to 34 carbon atoms, for example, dialkyl fumarate (two alkyl groups are each a linear, branched, or alicyclic group having 1 to 22 carbon atoms) and dialkyl maleate (two alkyl groups are each a linear, branched, or alicyclic group having 1 to 22 carbon atoms)
Among those exemplified above as the monomer (b3), from the viewpoints of liquid absorption of the electrolyte solution and voltage resistance, (b31), (b32), and (b33) are preferable, and methyl (meth)acrylate, ethyl (meth)acrylate, and butyl (meth)acrylate among (b31) are more preferable.
In the polymer, the contents of the vinyl monomer (b1) having a carboxyl group, the vinyl monomer (b2) represented by General Formula (1), and the copolymerizable vinyl monomer (b3) containing no active hydrogen are preferably 0.1 to 80% by mass of (b1), 0.1 to 99.9% by mass of (b2), and 0 to 99.8% by mass of (b3), with respect to the weight of the polymer.
If the content of these monomers is within the above ranges, the liquid absorption property for an electrolyte solution is improved.
The contents of (b1) to (b3) are more preferably 30 to 60% by mass of (b1), 5 to 60% by mass of (b2), and 5 to 80% by mass of (b3), and still more preferably 35 to 50% by mass of (b1), 15 to 45% by mass of (b2), and 20 to 60% by mass of (b3) .
A lower limit of the number average molecular weight of the polymer is preferably 10,000, more preferably 15,000, particularly preferably 20,000, and most preferably 30,000, and an upper limit thereof is preferably 2,000,000, more preferably 1,500,000, particularly preferably 1,000,000, and most preferably 800,000.
The number average molecular weight of the polymer can be determined by GPC (gel permeation chromatography) under the following conditions.

Device: Alliance GPC V2000 (manufactured by Waters)
Solvent: Ortho-Dichlorobenzene
Standard substance: Polystyrene
Sample concentration: 3 mg/ml

Column solid phase: Two PL gel 10 μm MIXED-B columns connected in series (manufactured by Polymer Laboratories Limited)
Column temperature: 135°C.

The solubility parameter (SP value) of the polymer is preferably 9.0 to 20.0 $(cal/cm^3)^{1/2}$. The SP value of the polymer is more preferably 9.5 to 18.0 $(cal/cm^3)^{1/2}$, and still more preferably 10.0 to 14.0 $(cal/cm^3)^{1/2}$. The polymer having an SP value of 9.0 to 20.0 $(cal/cm^3)^{1/2}$ is preferred in terms of liquid absorption of the electrolyte solution.

Furthermore, the glass transition point [hereinafter abbreviated as Tg; measurement method: DSC (differential scanning calorimetry] of the polymer is preferably 80 to 200°C, more preferably 90 to 190°C, and particularly preferably 100 to 180°C, from the viewpoint of the heat resistance of the battery.

The polymer can be produced by a known polymerization method (bulk polymerization, solution polymerization, emulsion polymerization, suspension polymerization, or the like)

The coating resin preferably has moderate flexibility in a state of being immersed in an electrolyte solution. Specifically, the tensile elongation at break of the coating resin in a saturated liquid absorbing state is preferably 10% or more, more preferably 20% or more, still more preferably 30% or more, particularly preferably 40% or more, and most preferably 50% or more. By coating the electrode active material with a resin having a tensile elongation at break of 10% or more, it is possible to relax a volume change of the electrode active material due to a charging and discharging reaction and to suppress expansion of the electrode. Incidentally, in the present specification, the "tensile elongation at break" is an index indicating flexibility of a resin. This is a value obtained by casting a coating resin solution on a PET film and drying to form a sheet with a thickness of 500 μm, immersing the sheet in an electrolyte solution (1 M $LiPF_6$, ethylene carbonate (EC)/diethyl carbonate (DEC) = 3/7 (volume ratio)) at 50°C for 3 days, and then measuring a value of a tensile elongation at break in a saturated liquid absorbing state in accordance with ASTM D683 (specimen shape Type II). A larger value of the tensile elongation at break of the coating resin is more preferable. An upper limit value thereof is not particularly limited, but is usually 400% or less, and preferably 300% or less. That is, a preferable range of the numerical values of the tensile elongation at break is 10 to 400%, 20 to 400%, 30 to 400%, 40 to 400%, 50 to 400%, 10 to 300%, 20 to 300%, 30 to 300%, 40 to 300%, or 50 to 300%.

Examples of a method for imparting flexibility to the coating resin and controlling the tensile elongation at break to a desired value include a method for introducing a flexible partial structure (for example, a long chain alkyl group, a polyether residue, an alkyl polycarbonate residue, an alkyl polyester residue, or the like) into the main chain of the coating resin. In addition, it is possible to adjust the tensile elongation at break by imparting flexibility to the coating resin by controlling the molecular weight of the coating resin or controlling a molecular weight between the crosslinks.

In the present embodiment, the contents of the coating resin and the conductive aid are not particularly limited, but the coating resin (resin solid content): the conductive aid is preferably 1 : 0.2 to 3.0 (mass ratio). Within such a range, the conductive aid can form an electron conductive path well in the coating agent. The coating amount with the coating agent is not particularly limited, but is preferably 1 to 10% by mass, more preferably 2 to 8% by mass, and still more preferably 3 to 7% by mass, with respect to 100% by mass of the electrode active material, in the case of a positive electrode active material. In the case of a negative electrode active material, the coating amount with the coating agent is preferably 0.1 to 15% by mass, more preferably 0.3 to 13% by mass, and still more preferably 0.5 to 12% by mass with respect to 100% by mass of the electrode active material.

(Method for Producing Coated Electrode Active Material)

A method for producing the coated electrode active material is not particularly limited, but examples thereof include the following methods. First, an electrode active material is added to a universal mixer and stirred at 10 to 500 rpm, and in the same state, a solution (resin solution for coating) including a coating resin and a solvent is added dropwise and mixed over 1 to 90 minutes. As the solvent herein, alcohols such as methanol, ethanol, isopropanol, and the like can be suitably used. Thereafter, a conductive aid is further added thereto and mixed. Furthermore, the temperature is increased to 50 to 200°C under stirring, and the pressure is lowered to 0.007 to 0.04 MPa and maintained as it is for 10 to 150 minutes, which makes it possible to obtain a coated electrode active material particle.

(Ion Conductive Polymer)

Examples of the ion conductive polymer include polyethylene oxide (PEO)-based and polypropylene oxide (PPO)-based polymers.

(Lithium salt)

Moreover, examples of a lithium salt (support salt) included in the electrolyte solution include lithium salts of inorganic acids, such as $LiPF_6$, $LiBF_4$, $LiSbF_6$, $LiAsF_6$$LiClO_4$, $Li[(FSO_2)_2N]$ (LiFSI), and the like; lithium salts of organic acids, such as $LiN(CF_3SO_2)_2$, $LiN(C_2F_5SO_2)_2$, $LiC(CF_3SO_2)_3$, and the like; etc. Among those, $LiPF_6$ or $Li[(FSO_2)_2N]$ (LiFSI) is preferable in terms of the battery output and the charge/discharge cycle characteristics.

(Binder)

The electrode for a non-aqueous electrolyte secondary battery of the present aspect does not substantially include a binder in a crystallized state as a constituent member of the second electrode active material layer. That is, the content of the binder in a crystallized state is 1% by mass or less with respect to 100% by mass of the total amount of the solid content included in the second electrode active material layer. In a case where the binder in a crystallized state is included, cracks are generated in the electrode active material layer if the electrode active material layer is thickened. As a result, the internal resistance of the battery is increased or the cycle durability is lowered. The content of the binder in a crystallized state is preferably 0.5% by mass or less, more preferably 0.2% by mass or less, still more preferably 0.1% by mass or less, and most preferably 0% by mass, with respect to 100% by mass of the total amount of the solid content included in the second electrode active material layer. That is, in the electrode for a non-aqueous electrolyte secondary battery according to the present aspect, the second electrode active material layer is preferably a so-called "non-binding body" which is not bound by a binder in a state where the electrode active material is crystallized by heating.

Moreover, in the electrode for a non-aqueous electrolyte secondary battery of the present aspect, members other than the electrode active material, or the coating agent (the coating resin or the conductive aid), the ion conductive polymer, and the lithium salt, used as necessary, as described above, may appropriately be used as a constituent member of the second electrode active material layer. In this case, from the viewpoint of improving the energy density of the battery, it is preferable that a member not significantly contributing to the progress of the charging and discharging reaction is not included in the electrode active material layer. Therefore, in one preferred embodiment of the present invention, the second electrode active material layer does not substantially include a binder which is added so as to bind the active material particles to the other members and maintain the structure of the electrode active material layer. Specifically, the content of the binder is preferably 1% by mass or less, more preferably 0.5% by mass or less, still more preferably 0.2% by mass or less, particularly preferably 0.1% by mass or less, and most preferably 0% by mass, with respect to 100% by mass of the total amount of the solid content included in the second electrode active material layer.

However, according to the studies conducted by the present inventors, it was found that it is preferable that a binder is contained in a prescribed amount in a non-crystallized state from the viewpoint of improving the cycle durability of the battery. Specifically, according to another preferred embodiment, the second electrode active material layer includes the binder in a non-crystallized state in the amount of preferably 0.5 to 3.3% by volume, and more preferably 1.0 to 2.5% by volume, with respect to the total volume of the electrode active material layer. With this configuration, there is an advantage that the electrode active material layer can be effectively suppressed from being collapsed even when the value of the liquid volume coefficient of the battery is increased, as compared with a case where the binder is hardly included or not included at all. Here, the "liquid volume coefficient" is a ratio of the volume of the electrolyte solution injected into the battery to the volume of the electrolyte solution that can be absorbed by the power generating element, and the larger the value, the less likely the shortage of the electrolyte solution occurs, which contributes to improvement of the capacity characteristics of the battery, and the like. For example, the liquid volume coefficient of a battery manufactured by injecting the electrolyte solution to the exact degree to be absorbed by the power generating element is 1, and the value of the liquid volume coefficient becomes larger as the volume of the electrolyte solution to be injected is larger than the volume of the electrolyte solution to the exact degree to be absorbed by the power generating element. In the present aspect, it is possible to increase the liquid volume coefficient while maintaining the shape of the electrode active material layer as described above. Accordingly, the value of the liquid volume coefficient in the present aspect is preferably 1.1 or more, more preferably 1.4 or more, and still more preferably 1.40 or more. On the other hand, the upper limit value of the liquid volume coefficient is not particularly limited, but it typically only needs to be 2 or less.

The binder which can be included in the second electrode active material layer is not particularly limited, but a binder other than an aqueous binder which is used after being dispersed in an aqueous solvent is preferable. For example, a binder formed of a semi-crystalline polymer or a non-crystalline polymer can be used, but is not particularly limited thereto. The semi-crystalline polymer is a polymer including both a crystalline region and a non-crystalline (amorphous) region, and exhibits a multiple melting behavior in a thermal analysis measurement. In the present aspect, any of binders that can function as the binder can be used. Further, in order to allow the polymer to function as the binder, first, an insulating material, which does not cause a side reaction (oxidation-reduction reaction) during charging and discharging, is required. In addition, those satisfying the following three points are more preferable: (1) maintaining a slurry used for manufacture of an active material layer in a stable state (having a dispersing action and a thickening action); (2) fixing particles of electrode active materials, conductive aids, and the like to each other so as to maintain a mechanical strength as an electrode and maintain an electrical contact between the particles; and (3) having an adhesive force (binding force) to a current collector.

From such viewpoint, as the polymer which constitutes the binder, fluorine-based resins or rubbers, such as polybinylidne fluoride (PVdF), a fluorine-based resin such as a copolymer of tetrafluoroethylene (TFE) and PVdF, polytetrafluoroethylene (PTFE), a tetrafluoroethylene-hexafluoroethylene copolymer (FEP), a tetrafluoroethylene-perfluoroalkyl vinyl ether copolymer (PFA), an ethylene-tetrafluoroethylene copolymer (ETFE), a polychlorotrifluoroethylene (PCTFE), an ethylene-teterafluoroethylene copolymer (ECTFE), polyvinyl chloride (PVF), and the like; or a vinylidene fluoride-based fluorine rubber such as a vinylidene fluoride-hexafluoropropylene-based fluorine resin (VdF-HFP-based fluorine rubber), a vinylidene fluoride-hexafluoropropylene-tetrafluoroethylene-based fluorine resin (VdF-HFP-TFE-based fluorine rubber), a vinylidene fluoride-pentafluoropropylene-based fluorine resin (VdF-PFP-based fluorine rubber), a vinylidene fluoride-pentafluoropropylene-tetrafluoroethylene-based fluorine resin (VdF-PFP-TFE-based fluorine rubber), a vinylidene fluoride-perfluoromethylvinyl ether-tetrafluoroethylene-based fluorine resin (VdF-PFMVE-TFE-based fluorine rubber), a vinylidene fluoride-chlorotrifluoroethylene-based fluorine resin (VdF-CTFE-based fluorine rubber), and the like can be used. In addition to those, other examples of the binder include at least one selected from the group consisting of polybutylene terephthalate, polyethylene terephthalate, polyethylene, polypropylene, polymethylpentene, and polybutene, or a compound in which a hydrogen atom of polyvinylidene fluoride (PVdF) is substituted with another halogen element. Since a binder formed of such a polymer has excellent heat resistance and a very wide potential window, and is stable for both positive and negative potentials, it can be suitably used in the electrode active material layer.

Furthermore, examples of the polymer include thermoplastic polymers such as polyether nitrile, polyacrylonitrile, polyimide, polyamide, an ethylene-vinyl acetate copolymer, polyvinyl chloride, an ethylene-propylene-diene copolymer, a styrene-butadiene-styrene block copolymer and a hydrogenated product thereof, a styrene-isoprene-styrene block copolymer and a hydrogenated product thereof, and the like; epoxy resins; and the like. These binders may be used alone or in combination of two or more kinds thereof.

The weight average molecular weight (Mw) of the polymer constituting the binder is preferably 50,000 to 1,000,000, and from the viewpoint of further improving the effect of the present invention, it is more preferably 100,000 to 500,000, and still more preferably 300,000 to 400,000. Further, in the present specification, as a value of Mw of the polymer constituting the binder, a value measured by gel permeation chromatography (GPC) using polystyrene as a standard substance is adopted.

The crystallization temperature (Tc) of the polymer constituting the binder is determined according to the type of the polymer, but the specific value is not particularly limited. From the viewpoint of removal of moisture and easiness of temperature control during drying, the crystallization temperature of the polymer constituting the binder is preferably 100°C or higher, more preferably 100 to 150°C, and still more preferably 110 to 130°C. For example, the crystallization temperature (Tc) of polyvinylidene fluoride (PVdF) which is one preferred example of the polymer constituting the binder is 130°C.

Furthermore, the melting point (Tm) of the polymer constituting the binder is also determined depending on the type of the polymer, but from the viewpoint of easiness of temperature control during drying, the melting point of the polymer constituting the binder is preferably 110°C or higher, more preferably 120 to 300°C, and still more preferably 140 to 260°C. In general, in the polymer constituting the binder, a phenomenon in which a crystalline region is broken by heating to exhibit fluidity is "melting" and this temperature is defined as a "melting point (Tm)" of the polymer. In addition, since the polymer generally have characteristic properties indicating a variance in the melting points (Tm) of the polymer, it is difficult to specify a specific value of the melting point of each of the polymers. For example, the melting point (Tm) of polyvinylidene fluoride (PVdF) which is one preferred example of the polymer constituting the binder is 170°C (having a melting point zone of 160°C to 180°C). Similarly, the Tm of polybutylene terephthalate is 228°C, the Tm of polyethylene terephthalate is 260°C, the Tm of polyethylene is 140°C, the Tm of polypropylene is 165°C, the Tm of polymethylpentene is 235°C, and the Tm of polybutene is 165°C, and a melting point zone is provided around the Tm.

The glass transition temperature (Tg) of the polymer constituting the binder is also determined according to the type of the polymer, but it is preferable to use a semi-crystalline polymer having a glass transition temperature in the range of -50 to 50°C from the viewpoint of the production environment. For example, the glass transition temperature (Tg) of polyvinylidene fluoride (PVdF) which is one preferable example of the polymer constituting the binder is 70 to 81°C.

Moreover, in the present specification, any of the crystallization temperature (Tc), the melting point (Tm), and the glass transition temperature (Tg) of the polymer constituting the binder can be determined by DSC (differential scanning calorimetry). Typically, the glass transition occurs with an increase in non-crystalline structures. Such a transition is shown as a stage in the baseline of a DSC curve. This is caused by a change in the heat capacity in a sample. Along with a rise in the temperature, the viscosity of the non-crystalline structure decreases and at a certain point, it reaches a temperature enough to cause the molecules to crystallize spontaneously, and this temperature is a crystallization temperature (Tc) . A transition from a non-crystalline solid to a crystalline solid is directed to an exothermic reaction, and Tc is shown as a peak. If the temperature further rises, it finally reaches a melting point (Tm) and is shown as an endotherm (bottom peak) . The thermal analysis conditions of DSC used in the present embodiment are as follows: the temperature was raised at 30°C/min, a melting point peak was measured (melting temperature), then the temperature was lowered at 30°C/min, and a recrystallization point (crystallization temperature) is measured.

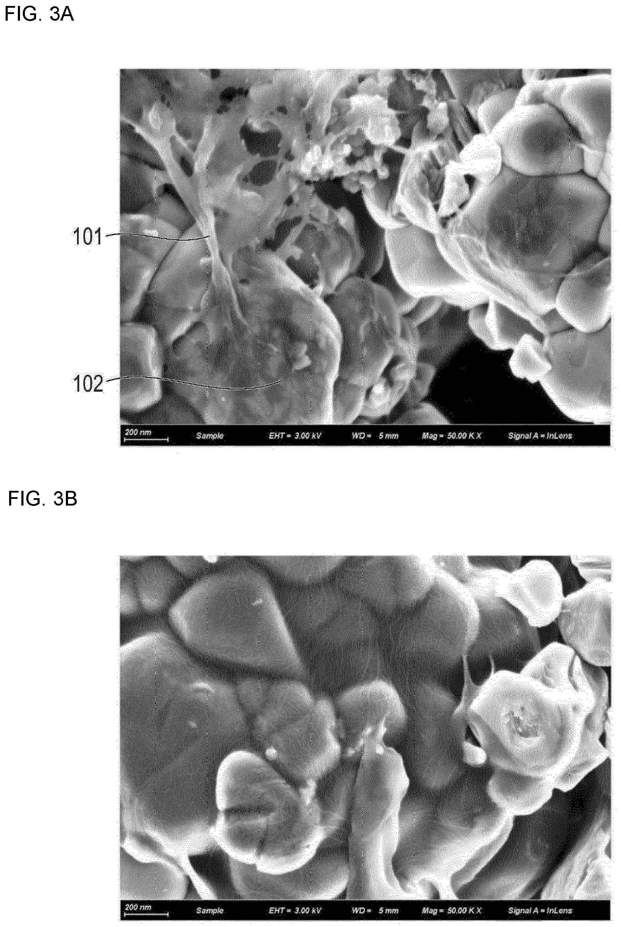

Whether or not the binder is in a crystallized state can be confirmed, for example, by observing a cross-section of the electrode active material with a scanning electron microscope (SEM). In addition, it can also be confirmed by observing a peak shift of the binder before and after the heat treatment using IR. Fig. 3A is a scanning electron microscope (SEM) photograph showing a state where PVdF that has not been crystallized as a binder binds the constituents of the electrode active material layer in a fibrous form. The electrode active material layer includes $LiNi_{0.8}Co_{0.15}Al_{0.05}O_2$ as a positive electrode active material, acetylene black and a carbon fiber (carbon nanofiber) as a conductive aid, and polyvinylidene fluoride (PVdF) in a non-crystallized state as a binder. As shown in Fig. 3A, the PVdF 101 in a non-crystallized state has a fibrous shape and binds electrode active material layer constituents such as the positive electrode active material 102 and the like in a fibrous form. Here, the expression that the binder "binds" the electrode active material layer constituents "in the fibrous form" means that the binder having the fibrous form as shown in Fig. 3A binds constituents of the active materials. On the other hand, PVdF in a crystallized state forms a spherical crystal as shown in Fig. 3B. If the binder forms the spherical crystal by crystallization, the electrode active material layer constituents cannot be "bound in a fibrous form". That is, in the present specification, the expression of "PVdF in a non-crystallized state" means a state where a spherical crystal is not confirmed when PVdF is observed with a scanning electron microscope (SEM). Similarly, the expression of "PVdF in a crystallized state" means a state where a spherical crystal is confirmed when PVdF is observed with a scanning electron microscope (SEM). In a case where the binder is included in the electrode active material layer, it is preferable that the binder is formed of a material having low flexibility from the viewpoint of holding the structure of the electrode active material layer. Specifically, it is preferable that the tensile elongation at break of the binder in the saturated liquid absorption state is less than 10%, more preferably 7% or less, still more preferably 5% or less, particularly preferably 3% or less, and most preferably 1% or less.

In this bipolar secondary battery of the present aspect, the thickness of the second electrode active material layer is preferably larger than that of the first electrode active material which will be described later. With such a thickness, a battery with a high capacity density can be obtained. Specifically, the thickness of the positive electrode active material layer is preferably 100 to 500 μm, more preferably 150 to 450 μm, and still more preferably 200 to 400 μm. Furthermore, the thickness of the negative electrode active material layer is preferably 100 to 500 μm, more preferably 150 to 450 μm, and still more preferably 200 to 400 μm. If the thickness of the second electrode active material layer is a value equal to or more than the above-mentioned lower limit value, it is possible to sufficiently enhance the energy density of the battery. On the other hand, if the thickness of the second electrode active material layer is a value equal to or less than the above-mentioned upper limit value, it is possible to sufficiently maintain the structure of the electrode active material layer.

The porosity of the second electrode active material layer is preferably 30 to 50%, and more preferably 35 to 45%, with respect to the positive electrode active material layer. Further, the porosity of the negative electrode active material layer is preferably 30 to 45%, more preferably 30 to 40%, and still more preferably 30 to 37%. If the porosity of the electrode active material layer is equal to or more than the lower limit value, it is not necessary to increase the pressing pressure when the coating film is pressed after coating an electrode active material slurry in the formation of the electrode active material layer. As a result, it is possible to suitably form the electrode active material layer having desired thickness and area. On the other hand, if the porosity of the electrode active material layer is equal to or less than the upper limit value, it is possible to sufficiently maintain a contact between the electron conductive materials (a conductive aid, an electrode active material, and the like), thereby preventing an increase in the electron transfer resistance. As a result, a charging and discharging reaction can be uniformly advanced in the entire electrode active material layer (in particular, in the thickness direction), and reduction in output characteristics of a battery (in particular, output characteristics at a high rate) can be prevented. In addition, in the present specification, the porosity of the electrode active material layer is measured by the following method.

(Method for Measuring Porosity of Electrode Active Material Layer)

The porosity of the electrode active material layer is calculated according to the following Equation (1). Further, the electrolyte solution may exist in some of the pores.

```
    Equation (1): Porosity (%) = 100 - Volume ratio (%) occupied by solid

content of electrode active material layer
```

Here, the "volume ratio (%) occupied by solid content" of the electrode active material layer is calculated from the following Equation (2).

$$\text{Equation (2): Volume ratio (\%) occupied by solid content = (Volume } (cm^3)$$

$$\text{of solid material/Volume } (cm^3) \text{ of electrode active material layer)} \times 100$$

In addition, the volume of the electrode active material layer is calculated from the thickness of the electrode and the coating area. Incidentally, the volume of the solid material is determined by the following procedure.

(a) The addition amounts of the respective materials included in the electrode active material slurry are weighed.
(b) The electrode active material slurry is applied onto the surface of a current collector, and then the weight of the current collector and the coating film are weighed.
(c) The slurry after application is pressed and the weight of the current collector and the coating film after pressing are weighed.
(d) The amount of the electrolyte solution sucked out at the time of pressing is calculated from "Value obtained by (c) - Value obtained by (b)".
(e) The weights of the respective materials in the electrode active material layer after pressing are calculated from the values of (a), (c), and (d).
(f) The volumes of the respective materials in the electrode active material layer are calculated from the weights of the respective materials calculated by (e) and the densities of the respective materials.
(g) The volume of the solid materials is calculated by adding up only the volumes of the solid materials among the volumes of the respective materials calculated by (f).

Moreover, with regard to the density of the second electrode active material layer, the density of the positive electrode active material layer is preferably 2.10 to 3.00 g/cm$^3$, more preferably 2.15 to 2.85 g/cm$^3$, and still more preferably 2.20 to 2.80 g/cm$^3$. In addition, the density of the negative electrode active material layer is preferably 0.60 to 1.30 g/cm$^3$, more preferably 0.70 to 1.20 g/cm$^3$, and still more preferably 0.80 to 1.10 g/cm$^3$. A battery having a sufficient energy density can be obtained if the density of the second electrode active material layer is a value equal to or more than the lower limit value. On the other hand, if the density of the second electrode active material layer is equal to or less than the upper limit value, it is possible to prevent a decrease in the porosity of the negative electrode active material layer. If the decrease in the porosity is suppressed, the electrolyte solution filling the gap is sufficiently secured, and thus, an increase in the ion transfer resistance in the negative electrode active material layer can be prevented. As a result, deterioration of output characteristics (in particular, output characteristics at a high rate) of a battery can be suppressed. The density of the electrode active material layer is measured by the following method in the present specification.

(Method for Measuring Density of Electrode Active Material Layer)

The density of the active material layer is calculated according to the following Equation (3).

$$\text{Equation (3): Electrode density } (g/cm^3) = \text{Weight (g) of solid material}$$

$$\div \text{ Volume } (cm^3) \text{ of electrode.}$$

In addition, the weight of the solid materials is calculated by adding up only the weight of the solid material among the weights of the respective materials in the electrode after pressing, obtained in the above (e). The volume of the electrode is calculated from the thickness of the electrode and the coating area.

[First Electrode Active Material Layer (Positive Electrode Active Material Layer or Negative Electrode Active Material Layer)]

The first electrode active material layer (the positive electrode active material layer or the negative electrode active material layer) includes a first electrode active material (a positive electrode active material or a negative electrode active material) and also includes a binder in a crystallized state. Further, the first electrode active material layer can include a conductive aid, an ion conductive polymer, a lithium salt, and the like, as necessary.

(Electrode Active material)

As the electrode active material (the positive electrode active material or the negative electrode active material), the same materials as those of the positive electrode active material or the negative electrode active material included in the second electrode active material layer can be used.
The first electrode active material and the second electrode active material may be composed of the same kind or different kinds of materials.
The average particle diameter of the first positive electrode active material included in the first positive electrode active material layer is preferably 1 to 100 $\mu$m, and more preferably 1 to 20 $\mu$m from the viewpoint of a high output.
In addition, the average particle diameter of the first negative electrode active material included in the first negative electrode active material layer is preferably 1 to 100 $\mu$m, and more preferably 1 to 20 $\mu$m.

(Conductive Aid)

As the conductive aid, the same materials as those of the conductive aid included in the second electrode active material layer can be used.

(Ion Conductive Polymer)

As the ion conductive polymer, the same materials as those of the ion conductive polymer included in the second electrode active material layer can be used.

(Lithium Salt)

As the lithium salt (support salt), the same materials as those of the lithium salt included in the second electrode active material layer can be used.

(Binder)

The binder included in the first electrode active material layer is not particularly limited, and fluorine-based resins or rubbers, such as a fluorine-based resin such as polyvinylidene fluoride (PVdF), a copolymer of tetrafluoroethylene (TFE) and PVdF, polytetrafluoroethylene (PTFE), a tetrafluoroethylene-hexafluoroethylene copolymer (FEP), a tetrafluoroethylene-perfluoroalkyl vinyl ether copolymer (PFA), an ethylene-tetrafluoroethylene copolymer (ETFE), a polychlorotrifluoroethylene (PCTFE), an ethylene-chlorotrifluoroethylene copolymer (ECTFE), polyvinyl chloride (PVF), and the like; or a vinylidene fluoride-based fluorine rubber such as a vinylidene fluoride-hexafluoropropylene-based fluorine rubber (VdF-HFP-based fluorine rubber), a vinylidene fluoride-hexafluoropropylene-tetrafluoroethylene-based fluorine rubber (VdF-HFP-TFE-based fluorine rubber), a vinylidene fluoride-pentafluoropropylene-based fluorine rubber (VdF-PFP-based fluorine rubber), a vinylidene fluoride-pentafluoropropylene-tetrafluoroethylene-based fluorine rubber (VdF-PFP-TFE-based fluorine rubber), a vinylidene fluoride-perfluoromethylvinyl ether-tetrafluoroethylene-based fluorine rubber (VdF-PFMVE-TFE-based fluorine rubber), a vinylidene fluoride-chlorotrifluoroethylene-based fluorine rubber (VdF-CTFE-based fluorine rubber), and the like can be used. In addition to those, for example, at least one selected from the group consisting of polybutylene terephthalate, polyethylene terephthalate, polyethylene, polypropylene, polymethylpentene, and polybutene, or a compound in which a hydrogen atom of polyvinylidene fluoride (PVdF) is substituted with another halogen element can be used.
Other examples thereof include thermoplastic polymers such as polyether nitrile, polyacrylonitrile, polyimide, polyamide, an ethylene-vinyl acetate copolymer, polyvinyl chloride, a styrene-butadiene rubber (SBR), an ethylene-propylene-diene copolymer, a styrene-butadiene-styrene block copolymer and a hydrogenated product thereof, and a styrene-isoprene-styrene block copolymer and a hydrogenated product thereof, and the like; epoxy resins; and the like. Alternatively, an aqueous binder such as the styrene-butadiene rubber (SBR) and the like may be used alone or in combination with a thickener such as carboxymethyl cellulose (CMC) and the like as another binder. In addition, such another binder may be used alone or in combination of two or more kinds thereof.
In the first electrode active material layer, the binder is included in a state where at least a part thereof is crystallized. By incorporating a step of applying a slurry including the first electrode active material and the binder onto the current collector, and then performing a heat treatment into the step of manufacturing the first electrode active material layer, the binder can be brought into a crystallized state. By incorporating the binder in a crystallized state, the adhesion between the electrode active materials and the adhesion between the electrode active material and the current collector are improved. As a result, the contact resistance can be sufficiently reduced even in a case where a high pressure is not applied from the upper and lower surfaces of the battery (the direction perpendicular to the electrode active material layer). Therefore, for example, in a case where the installation space is limited as in a battery for a vehicle, it is suitable for a case where it is difficult to apply a high pressure.

The content of the binder in the first electrode active material layer is not particularly limited, but is, for example, 1 to 10% by mass, and preferably 1 to 8% by mass, with respect to 100% by mass of the total amount of the solid content included in the first electrode active material layer.

In the electrode for a non-aqueous electrolyte secondary battery of the present aspect, with regard to the thickness of the first electrode active material layer, the thickness of the positive electrode active material layer is not particularly limited, but is preferably 100 $\mu$m or less, more preferably 10 to 100 $\mu$m, still more preferably 10 to 75 $\mu$m, and even still more preferably 20 to 60 $\mu$m. Further, the thickness of the negative electrode active material layer is not particularly limited, but is preferably 100 $\mu$m or less, more preferably 5 to 100 $\mu$m, still more preferably 5 to 75 $\mu$m, and even still more preferably 10 to 60 $\mu$m. If the thickness of the first electrode active material layer is 100 $\mu$m or less, the structure of the electrode active material layer can be sufficiently maintained. On the other hand, if the value is equal to or more than the above-mentioned lower limit value, the contact resistance can be more effectively reduced.

Furthermore, the total thickness of the thickness of the first electrode active material layer and the thickness of the second electrode active material layer is preferably 200 $\mu$m or more. By adjusting the total thickness to the range, a ratio of the volume of the electrode active material layer contributing to a battery reaction per unit volume of the battery is increased. As a result, the volume energy density is increased. The total thickness is more preferably 250 $\mu$m or more, and still more preferably 300 $\mu$m or more. The upper limit value of the total thickness is not particularly limited, but is preferably 750 $\mu$m or less from the viewpoint of easily maintaining the structure of the electrode active material layer.

The porosity of the first electrode active material layer is not particularly limited, but is preferably lower than the porosity of the second electrode active material layer. Thus, the electron transfer resistance in the first electrode active material layer arranged on the current collector side can be reduced, and the ion transfer resistance in the second electrode active material layer arranged on the electrolyte layer side can be reduced. Therefore, the charging and discharging reaction can be uniformly advanced in the thickness direction of the electrode active material layer. As a result, the output characteristics of the battery can be improved. Specifically, the porosity of the positive electrode active material layer is preferably 20 to 30%. In addition, the porosity of the negative electrode active material layer is preferably 20 to 30%.

<Method for Producing Electrode for Non-Aqueous Electrolyte Secondary Battery>

A method for producing the electrode for a non-aqueous electrolyte secondary battery is not particularly limited. For example, a method including preparing a first electrode active material slurry for forming a first electrode active material layer and a second electrode active material slurry for forming a second electrode active material layer; and coating a current collector with the first electrode active material slurry to form the first electrode active material layer, and then coating the first electrode active material layer with the second electrode active material slurry to form the second electrode active material layer is used.

Hereinafter, an example of a preferred method for producing the electrode for a non-aqueous electrolyte secondary battery according to the present aspect will be described.

[First Electrode Active Material Layer]

The first electrode active material layer can be manufactured, for example, by preparing a first electrode active material slurry, and coating a current collector with the active material slurry, followed by drying and then pressing. The active material slurry includes the electrode active material (the positive electrode active material or the negative electrode active material), the conductive aid, the binder, the solvent, and the like as described above.

The solvent is not particularly limited, and N-methyl-2-pyrrolidone (NMP), dimethylformamide, dimethylacetamide, methylformamide, cyclohexane, hexane, water, or the like can be used.

The concentration of the solid content of the first electrode active material slurry is not particularly limited, but is preferably 40 to 80% by mass in consideration of the easiness of coating.

A method for applying the first electrode active material slurry onto the current collector is not particularly limited, and examples thereof include a screen printing method, a spray coating method, an electrostatic spray coating method, an inkjet method, a doctor blade method, and the like.

A method for drying the coating film formed on the surface of the current collector is not particularly limited, and may be any of methods by which at least a part of the solvent in the coating film is removed. Examples of the drying method include heating. The drying conditions (a drying time, a drying temperature, and the like) can appropriately be set according to the volatilization rate of a solvent contained in the active material slurry to be applied, the amount of the active material slurry to be applied, and the like. For example, the drying temperature for the coating film is not particularly limited, but is 40 to 100°C, and the drying time is appropriately set at the time when drying is completed at the temperature, but is, for example, 2 seconds to 1 hour.

The pressing means is not particularly limited, and for example, a roll press, a flat plate press, or the like can be used.

Preferably, after the pressing step, for example, heating and drying at 100 to 180°C, and preferably heating and drying in vacuo is performed. Thus, the binder is crystallized to improve the adhesion with the current collector.

[Second Electrode Active Material Layer]

The method for manufacturing the second electrode active material layer is not particularly limited, and can be manufactured with reference to a method known in the related art as appropriate. However, in the present aspect, it is preferable to reduce the content of a member not significantly contributing to the progress of the charging and discharging reaction as much as possible in the electrode active material layer from the viewpoint of improving the energy density of the battery, as mentioned above. Therefore, hereinafter, as one preferred aspect of the manufacturing method, a method not substantially including the binder in the electrode active material layer will be described.

It is preferable that the method for manufacturing the second electrode active material layer includes preparing a second electrode active material slurry and coating the surface of the first electrode active material layer with the second electrode active material slurry to form a coating film.

[Preparation of Dispersion]

In the preparation of the second electrode active material slurry, first, the second electrode active material and the solvent are mixed. Thus, a dispersion is prepared.

Here, specific configurations of the second electrode active material are as described above, and thus, detailed description thereof will be omitted here.

The solvent preferably includes a solvent constituting an electrolyte solution (liquid electrolyte) used in a non-aqueous electrolyte secondary battery to which the electrode of the present aspect is applied, and it is more preferably the same as the solvent. From such a viewpoint, in a preferred embodiment, examples of the solvent include ethylene carbonate (EC), propylene carbonate (PC), diethyl carbonate (DEC), a mixed solvent thereof, and the like, and a mixed solvent of EC and PC or a mixed solvent of EC and DEC is more preferable . In this case, the mixing ratio (volume ratio) of EC and PC or DEC is preferably 3 : 7 to 7 : 3, more preferably 2 : 3 to 3 : 2, and still more preferably about 1 : 1.

The amount of the solvent to be used is not particularly limited, but it is preferable to use the solvent in an amount enough to exactly maintain the solid content constituting the second electrode active material layer. With this configuration, it is possible to enhance the production efficiency, in particular, in a case where a solvent included in the electrolyte solution of a battery is used as it is as the first solvent. For example, the amount of the solvent to be used is preferably 10 to 80% by mass, and more preferably 20 to 70% by mass, with respect to 100% by mass of the solid components included in the dispersion to be prepared.

(Other Components)

The second electrode active material slurry may include other components . For example, in a case where the above-mentioned components (a conductive aid, an ion conductive polymer, a lithium salt, and the like) are used as constituents of the second electrode active material layer, the dispersion can be included simultaneously in the preparation of the dispersion in the present step. The specific constitutions of these components are as described above, and thus, detailed description thereof will be omitted here.

The composition of the dispersion obtained by mixing the above components is not particularly limited, but the dispersion preferably has such a composition that the composition upon removal of the solvent is similar to the composition of the second electrode active material layer.

In the present step, the mixing order, the mixing method, and the like of the respective components to obtain the dispersion are not particularly limited. However, considering the battery performance, it is preferable to strictly exclude the mixing of moisture in the step of preparing the dispersion (and the second electrode active material slurry which will be described later) .

The method for preparing the dispersion is not particularly limited, and appropriate reference can be made to findings known in the related art such as the addition order of the members, the mixing method, and the like. However, since the concentration of the solid content of the dispersion in this step may be relatively high, it is preferable to use a mixer capable of imparting high shear as a mixer for mixing the respective materials. Specifically, a planetary mixer, a kneader, a homogenizer, an ultrasonic homogenizer, or a blade-type stirrer such as a disposer and the like is preferable, and in particular, the planetary mixer is particularly preferable from the viewpoint of solid kneading . Further, the specific mixing method is not also particularly limited. For example, it is preferable to perform solid kneading at a higher concentration of the solid content than the final concentration of the solid content of the obtained dispersion, and then add a solvent component (preferably the solvent mentioned above, and more preferably an electrolyte solution further including a lithium salt), followed by further mixing. In addition, the mixing time is not particularly limited and may be a time that enables uniform mixing to be achieved. For example, solid kneading and subsequent mixing may be performed for 10 to 60 minutes, respectively, and each step may be performed at a time or may also be dividedly performed several times.

Here, with regard to preferred embodiments in the preparation of a dispersion. In a case where the solvent includes a solvent constituting an electrolyte solution (liquid electrolyte) for use in a non-aqueous electrolyte secondary battery to which an electrode according to the present aspect is applied, it is preferable that an electrolyte solution as a mixture of the solvent and a lithium salt is prepared in advance, and then added in the preparation of an electrode active material slurry and used. Here, the concentration of the lithium salt in the electrolyte solution is preferably 1 to 3 mol/L. Further, the lithium salt is preferably the one described in the section (Lithium Salt) above, and from the viewpoint of battery output and charge/discharge cycle characteristics, $LiPF_6$ or $Li[(FSO_2)_2N]$ (LiFSI) is more preferable, and $Li[(FSO_2)_2N]$(LiFSI) is particularly preferable. It is possible to prepare such an electrolyte solution with reference to a method known in the related art. Furthermore, in the preparation of the electrolyte solution, as additive, for example, vinylene carbonate, methyl vinylene carbonate, dimethyl vinylene carbonate, phenyl vinylene carbonate, diphenyl vinylene carbonate, ethyl vinylene carbonate, diethyl vinylene carbonate, vinyl ethylene carbonate, 1,2-divinyl ethylene carbonate, 1-methyl-1-vinyl ethylene carbonate, 1-methyl-2-vinyl ethylene carbonate, 1-ethyl-1-vinyl ethylene carbonate, 1-ethyl-2-vinyl ethylene carbonate, vinyl vinylene carbonate, allyl ethylene carbonate, vinyloxymethyl ethylene carbonate, allyloxymethyl ethylene carbonate, acryloxymethyl ethylene carbonate, methacryloxymethyl ethylene carbonate, ethynyl ethylene carbonate, propargyl ethylene carbonate, ethynyloxy methylethylene carbonate, propargyloxy ethylene carbonate, methylene ethylene carbonate, 1,1-dimethyl-2-methylene ethylene carbonate, or the like can further be added. Among those, vinylene carbonate, methyl vinylene carbonate, or vinyl ethylene carbonate is preferable, and vinylene carbonate or vinyl ethylene carbonate is more preferable. Such additives may be used alone or in combination of two or more kinds thereof.

[Preparation of Second Electrode Active Material Slurry]

Subsequently, the dispersion obtained in the above step is stirred and mixed. In this case, a part of the solvent may be removed from the dispersion. Thus, the second electrode active material slurry is prepared. Further, the step of stirring and mixing the dispersion may be performed after a certain period of time from the preparation of the dispersion as described above or may be performed continuously during or immediately after the preparation of the dispersion.

A specific method for stirring and mixing the dispersion is not particularly limited. For example, a method in which the dispersion obtained as above is continuously stirred for a certain period of time using a known stirring means such as a mixing defoaming machine and the like is mentioned. In this case, the stirring speed is not particularly limited, but is preferably 1,000 to 5,000 rpm. In addition, if the stirring time is too short, the materials cannot be sufficiently dispersed and if the stirring time is too long, there is a possibility that decomposition of the lithium salt included in the electrolyte solution occurs by heat generation, and therefore, the stirring time is preferably approximately 10 seconds to 5 minutes.

By stirring and mixing the dispersion in such a way, a second electrode active material slurry is obtained. The concentration of the solid content of the second electrode active material slurry is preferably 50% by mass or more, more preferably 55% by mass or more, still more preferably 57% by mass or more, particularly preferably 60% by mass or more, and most preferably 62% by mass or more in a case where the second electrode active material slurry is used to form a positive electrode active material layer (that is, in a case of the positive electrode active material layer). Furthermore, the concentration of the solid content of the electrode active material slurry is preferably 35% by mass or more, more preferably 37% by mass or more, still more preferably 39% by mass or more, particularly preferably 40% by mass, and most preferably 42% by mass or more in a case where the electrode active material slurry is used to form a negative electrode active material layer (that is, in a case of the negative electrode active material slurry) . On the other hand, the upper limit value of the concentration of the solid content of the coating liquid of the second electrode active material slurry is not particularly limited, but is preferably 80% by mass or less in a case where the second electrode active material slurry is used to form a positive electrode active material layer. The concentration of the solid content of the electrode active material slurry is preferably 55% by mass or less in a case where the coating liquid is used to form the negative electrode active material layer (that is, in a case of the slurry for a negative electrode active material layer). If the concentration is within the range, a second electrode active material layer having a sufficient thickness in the coating step which will be described later can be easily formed. In addition, adjustment of the porosity or the density is facilitated with a pressing treatment to be carried out as necessary.

(Coating Step)

In the coating step, the surface of the first electrode active material layer is coated with the second electrode active material slurry obtained above to form a coating film. The coating film finally constitutes the electrode active material layer.

A coating means for carrying out the coating in a coating step is not particularly limited and a coating means known in the related art can appropriately be used. In order to obtain a coating film having a surface with high smoothness is obtained by coating the electrode active material slurry having a high concentration of the solid content, it is preferable to use a coating means capable of coating the electrode active material slurry at such a coating rate that a relatively high shear stress is applied at the time of coating. Among those, a coating method using a slit die coater for performing coating by applying an electrode active material slurry from a slit is an example of highly suitable coating means due to thin-film coating and excellent uniformity in the coating thickness.

The thickness of the coating film obtained by coating in the coating step is not particularly limited, and may appropriately be set so as to finally achieve the thickness of the second electrode active material layer.

In the manufacturing method of the present aspect, a battery can be produced after applying the second electrode active material slurry, in particular, while not drying the second electrode active material slurry. Therefore, it is difficult to cut out the electrode in a desired area after applying the second electrode active material slurry. Accordingly, in this step, it is necessary to apply the second electrode active material slurry onto the surface of the first electrode active material layer so as to reach a desired area. For this purpose, a surface of the current collector other than the applied part may be subjected to a masking treatment or the like in advance.

Further, the coating film obtained by coating with the second electrode active material slurry may be subjected to a pressing treatment. If the pressing treatment is performed, it is preferable that the press is performed in a state where a porous sheet is arranged on the surface of the coating film. Furthermore, an electrode active material layer having higher surface uniformity can be obtained by performing such the pressing treatment. Furthermore, a porous sheet is used for the purposes of preventing the slurry from being adhered to a pressing apparatus when the coating film is pressed; absorbing the excess electrolyte solution exuded during the pressing; and the like. Therefore, the material and the form of the porous sheet are not particularly limited as long as they can achieve the purposes.

For example, the same ones as a microporous film, a nonwoven fabric, and the like which are used as a separator in the present technical field can be used as the porous sheet. Specific examples of the microporous film include a microporous film formed of a hydrocarbon-based resin such as polyimide, aramid, polyvinylidene fluoride-hexafluoropropylene (PVdF-HFP), and the like; a glass fiber; or the like. In addition, examples of the nonwoven fabric include a nonwoven fabric in which cotton, rayon, acetate, nylon, and polyester, a polyolefin such as PP, PE, and the like; and polyimide, aramid, or the like are used alone or in mixture thereof.

Furthermore, the porous sheet may be removed after pressing or may also be used as it is as a separator of a battery. In a case where the porous sheet is used as it is as the separator after pressing, an electrolyte Layer may be formed using the porous sheet alone as the separator, or an electrolyte Layer may also be formed by combining the porous sheet with another separator (that is, using two or more separators).

The pressing apparatus for performing the pressing treatment is preferably an apparatus with which a pressure is uniformly applied to the entire surface of the coating film, and specifically, HIGH PRESSURE JACK J-1 (manufactured by AS ONE Corporation) can be used. The pressure at the time of pressing is not particularly limited, but is preferably 2 to 40 MPa, more preferably 5 to 35 MPa, and still more preferably 5 to 30 MPa. If the pressure is within the above range, the porosity or the density of the second electrode active material layer according to the above-mentioned preferred embodiments can be easily realized.

Furthermore, the second electrode active material layer may include a binder in a non-crystallized state as mentioned above. A method for introducing the binder in a non-crystallized state into the second electrode active material layer is not particularly limited. Examples of the method include a method including preparing a dispersion by mixing a second electrode active material, a binder, a first solvent in which the binder is not dissolved, and a second solvent in which the binder can be dissolved, preparing a second electrode active material slurry by removing the second solvent from the dispersion, and then forming a coating film by coating the surface of the first electrode active material layer with the second electrode active material slurry.

Specifically, in the step of [Preparation of Dispersion] above, a dispersion is prepared by mixing the second electrode active material, a binder, a first solvent in which the binder is not dissolved, and a second solvent in which the binder can be dissolved.

The first solvent is a solvent in which the binder is not dissolved. In the present specification, an expression that a certain solid content is "not dissolved" in a certain solvent means that the solubility (25°C) of the solid content in the solvent is less than 0.1 g/100 g solvent.

The specific kind of the first solvent cannot be determined unambiguously since the solvent which can serve as the first solvent is also changed if the kind of the binder as the solid content is different in physical properties such as a molecular weight and the like. For this reason, the first solvent may be determined depending on the form of the binder.

For example, in a case where the binder is polyvinylidene fluoride (PVdF), examples of the first solvent include ethylene carbonate (EC), propylene carbonate (PC), diethyl carbonate (DEC), and the like.

In a preferred embodiment, the first solvent is a low volatile solvent. Specifically, the vapor pressure at 25°C of the first solvent is preferably 3,200 Pa or less, more preferably 1,000 Pa or less, and still more preferably 100 Pa or less.

Furthermore, in another preferred embodiment, it is preferable that the first solvent includes a solvent constituting an electrolyte solution (liquid electrolyte) for use in a non-aqueous electrolyte secondary battery to which the electrode for a non-aqueous electrolyte secondary battery according to the present aspect is applied, and it is more preferable that the first solvent is the same as such the solvent. A preferred aspect of the solvent constituting the electrolyte solution (liquid electrolyte) is the same as that described above.

The amount of the first solvent to be used is not particularly limited, but it is preferable to use the first solvent in an amount to an extent to exactly maintain the solid content constituting the electrode active material layer. By adopting this configuration, it is possible to enhance a production efficiency, in particular, in a case where a solvent included in an electrolyte solution of a battery is used as it is as the first solvent. For example, the amount of the first solvent to be used is preferably 10 to 80% by mass, and more preferably 20 to 70% by mass, with respect to 100% by mass of the solid content included in the dispersion to be prepared.

The second solvent is a solvent in which the binder can be dissolved. In the present specification, an expression that a certain solid content "can be dissolved" in a certain solvent means that the solubility (25°C) of the solid content in the solvent is 0.1 g/100 g solvent or more.

The specific kind of the second solvent cannot be determined unambiguously since the solvent which can serve as the second solvent is also changed if the kind of the binder as the solid content is different in physical properties such as a molecular weight and the like. For this reason, the second solvent may be determined depending on the form of the binder.

For example, in a case where the binder is polyvinylidene fluoride (PVdF), examples of the second solvent include dimethyl carbonate (DMC), acetone, ethanol, and the like. Among those, dimethyl carbonate is particularly preferable from the viewpoint where the water content in the solvent is small.

In a preferred embodiment, the second solvent is a solvent having higher volatility than the first solvent. Specifically, the second solvent preferably has a vapor pressure of over 3,200 Pa at 25°C and is more preferably 6,000 Pa or less.

The amount of the second solvent to be used is not particularly limited, and may be an amount in which the binder can be sufficiently dissolved in the obtained dispersion. Further, since the second solvent is removed as described later, if energy or time for removing the second solvent is excessively consumed if the amount of the second solvent to be used is too large. For example, the amount of the second solvent to be used is preferably 100 to 20,000% by mass, and more preferably 900 to 9,900% by mass, with respect to 100% by mass of the binder included in the dispersion to be prepared. Finally, the amount of the second solvent to be used is preferably adjusted such that the concentration of the binder in the dispersion is 1 to 10% by mass.

Furthermore, in another preferred embodiment, a solution (binder solution) in which a binder is dissolved in a second solvent in advance by mixing a binder and a second solvent in which the binder can be dissolved is prepared in advance, and the solution may be added and used in the preparation of the second electrode active material slurry. By using such a method, it is possible to further improve the dispersion state of the binder in the dispersion, and thus, further improve the surface smoothness of the obtained electrode active material layer. Further, the concentration of the binder solution is not particularly limited, but is preferably approximately 0.5 to 10% by mass and more preferably approximately 2 to 8% by mass from the viewpoint of improving the dispersion state of the binder. In addition, in the preparation of the binder solution, a mixing operation may be carried out by heating the binder and the second solvent in a mixed state to approximately 40 to 80°C for approximately 0.5 to 5 minutes.

With regard to the other conditions, the operation can be performed under such conditions which are the same as in [Preparation of Dispersion] above.

Subsequently, the second solvent is removed from the dispersion obtained in the above step. Thus, an electrode active material slurry is prepared. Further, the step of removing the second solvent may be performed after a certain period of time from the preparation of the dispersion as described above or may be performed continuously during or immediately after the preparation of the dispersion.

A specific method for removing the second solvent is not particularly limited, and may be any of methods in which the second solvent is substantially removed from the dispersion obtained as above. For example, the second solvent can be slowly removed by continuously stirring the dispersion obtained as above for a certain period of time using a known stirring means such as a mixing defoaming machine and the like. In this case, the stirring speed is not particularly limited, but is preferably 100 to 5,000 rpm. Further, the stirring time is not particularly limited, but is preferably approximately 10 seconds to 240 minutes. In addition, the second solvent may be removed by heating the dispersion obtained as above at a temperature lower than the crystallization temperature of the binder.

Here, in a case where the binder is included in the second electrode active material layer, the total amount of the second solvent is preferably removed so as not to finally remain inside the battery.

By removing the second solvent as above, it is possible to obtain the second electrode active material slurry. The content of the second solvent in the obtained second electrode active material slurry is not particularly limited, but is preferably 1 part by mass or less, more preferably 0.1 parts by mass or less, and still more preferably 0 parts by mass, with respect to 100 parts by mass of the solid content of the second electrode active material slurry.

Moreover, the second electrode active material slurry obtained as above contains a solid content constituting the second electrode active material layer and a first solvent, and in some cases, a trace amount of a second solvent. The concentration of the solid content of the second electrode active material slurry is the same as that in the case where the binder described in [Preparation of Second Electrode Active Material Slurry] above is not used.

As for the second electrode active material slurry manufactured as above, the coating step, and the pressing step as necessary are performed in a similar manner to the case where the binder is not used as described above, whereby a second electrode active material layer can be formed.

In this case, it is preferable that a step of crystallizing the binder included in the coating film after applying the second electrode active material slurry to obtain a coating film is not included. In other words, it is preferable that a step of subjecting the coating film to a heating treatment to an extent that the binder included in the obtained coating film is crystallized is not included. In addition, it is more preferable that a step of subjecting the obtained coating film to a heating treatment is not included. In such a case where the heating treatment is not performed, a binder in a non-crystallized state is included in the second electrode active material layer. For example, since PVdF in a non-crystallized state has a fibrous shape, in a case where the heating treatment is not performed on the coating film during the production of the electrode, the PVdF in a non-crystallized state binds the active material layer constituents such as a positive electrode active material and the like in a fibrous form as shown in Fig. 3A.

<Constituents Other than Electrodes>

As described above, the electrodes among the constituents of the bipolar secondary battery according to the preferred embodiments of the present invention and methods for producing the same are described above in detail, but with regard to the other constituent elements, reference can be made to findings known in the related art as appropriate.

(Electrolyte Layer)

An electrolyte for use in the electrolyte layer of the present aspect is not particularly limited, and a liquid electrolyte, a gel polymer electrolyte, or an ionic liquid electrolyte is used without limitation. By using such the electrolyte, high lithium ion conductivity can be secured.

The liquid electrolyte has a function as a carrier of a lithium ion. The liquid electrolyte constituting an electrolyte solution layer has a form in which a lithium salt is dissolved in an organic solvent. As the organic solvent and the lithium salt to be used, for example, the same ones as those exemplified as the solvents and the lithium salt to be used for constitution of the electrode active material slurry in the method for producing an electrode for a non-aqueous electrolyte secondary battery can be used. The above-mentioned additive may further be included in the liquid electrolyte. In addition, the concentration of the lithium salt in the liquid electrolyte is preferably 0.1 to 3.0 M, and more preferably 0.8 to 2.2 M. Incidentally, in a case where the additive is used, the amount of the additive to be used is preferably 0.5 to 10% by mass, and more preferably 0.5 to 5% by mass, with respect to 100% by mass of the liquid electrolyte before adding the additive.

As the organic solvent, the solvent described in the section of [Preparation of Dispersion] in the preparation of the second electrode active material layer above can be preferably used. Further, as the lithium salt, the lithium salt described in the section of (Lithium Salt) above can be preferably used. Among those, from the viewpoints of a battery output and charge/discharge cycle characteristics, $LiPF_6$ or $Li[(FSO_2)_2N](LiFSI)$ is more preferable, and $Li[(FSO_2)_2N](LiFSI)$ is particularly preferable.

The gel polymer electrolyte has a configuration in which the liquid electrolyte is injected into a matrix polymer (host polymer) formed of an ion conductive polymer. By using the gel polymer electrolyte as an electrolyte, the fluidity of the electrolyte is lost and the ion conductivity between the layers is easily blocked, and therefore, the use of the gel polymer electrolyte is excellent. Examples of the ion conductive polymer used as a matrix polymer (host polymer) include polyethylene oxide (PEO), polypropylene oxide (PPO), polyethylene glycol (PEG), polyacrylonitrile (PAN), polyvinylidene fluoride-hexafluoropropylene (PVdF-HEP), polymethyl methacrylate (PMMA), copolymers thereof, and the like.

The matrix polymer of the gel polymer electrolyte can exhibit an excellent mechanical strength by forming a crosslinked structure. In order to form the crosslinked structure, a polymerizable polymer for forming a polymer electrolyte (for example, PEO or PPO) may be subjected to a polymerization treatment such as thermal polymerization, ultraviolet polymerization, radiation polymerization, electron beam polymerization, and the like, using an appropriate polymerization initiator.

The ionic liquid electrolyte is in the form in which a lithium salt is dissolved in an ionic liquid. In addition, the ionic liquid refers to a series of compounds that are salts formed of only a cation and an anion and are liquid at normal temperature.

The cation component constituting the ionic liquid is preferably at least one selected from the group consisting of a substituted or unsubstituted imidazolium ion, a substituted or unsubstituted pyridinium ion, a substituted or unsubstituted pyrrolium ion, a substituted or unsubstituted pyrazolium ion, a substituted or unsubstituted pyrrolinium ion, a substituted or unsubstituted pyrrolidinium ion, a substituted or unsubstituted piperidinium ion, a substituted or unsubstituted triadinium ion, and a substituted or unsubstituted ammonium ion.

Specific examples of the anion component constituting the ionic liquid include a halide ion such as a fluoride ion, a chloride ion, a bromide ion, an iodide ion, and the like, a nitrate ion ($NO_3^-$), a tetrafluoroborate ion ($BF_4^-$), a hexafluorophosphate ion ($PF_6^-$), ($FSO_2)_2N^-$, $AlCl_3^-$, a lactate ion, an acetate ion ($CH_3COO^-$), a trifluoroacetate ion ($CF_3COO^-$), a methanesulfonate ion ($CH_3SO_3^-$), a trifluoromethane sulfonate ion ($CF_3SO_3^-$), a bis(trifluoromethanesulfonyl)imide ion ($(CF_3SO_2)_2N^-$), a bis (pentafluoroethylsulfonyl) imide ion ($(C_2F_5SO_2)_2N^-$), $BF_3C_2F_5^-$, a tris(trifluoromethanesulfonyl) carbonate ion ($(CF_3SO_2)_3C^-$), a perchlorate ion ($ClO_4^-$), a dicyanamide ion ($(CN)_2N^-$), an organic sulfate ion, an organic sulfonate ion, $R^1COO^-$, $HOOCR^1COO^-$, $-OOCR^1COO^-$, $NH_2CHR^1COO^-$ (in which $R^1$ is a substituent, which is an aliphatic hydrocarbon group, an alicyclic hydrocarbon group, an aromatic hydrocarbon group, an ether group, an ester group, or an acyl group, and the substituent may include a fluorine atom), and the like.

Preferable examples of the ionic liquid include 1-methyl-3-methylimidazolium bis(trifluoromethanesulfonyl)imide and N-methyl-N-propylpyrrolidium bis(trifluoromethanesulfonyl)imide. These ionic liquids may be used alone or in combination of two or more kinds thereof.

The lithium salt and the additives used in the ionic liquid electrolyte are the same as those used in the liquid electrolyte as described above.

In the bipolar secondary battery in the present aspect, a separator may be employed for the electrolyte layer. The separator has a function of holding an electrolyte to secure lithium ion conductivity between a positive electrode and a negative electrode and a function as a partition wall between the positive electrode and the negative electrode. In particular, in a case where a liquid electrolyte or an ionic liquid electrolyte is used as the electrolyte, it is preferable that the separator is employed.

Examples of a form of the separator include a porous sheet separator, a nonwoven fabric separator, and the like, each of which is formed of a polymer or fiber that absorbs and holds the electrolyte.

As the porous sheet separator formed of the polymer or the fiber, for example, a microporous (microporous film) separator can be used. Specific examples of the form of the porous sheet formed of the polymer or the fiber include a microporous (microporous film) separator formed of a hydrocarbon-based resin such as a polyolefin including polyethylene (PE), polypropylene (PP), and the like; a laminate obtained by laminating a plurality of these polyolefins (for example, a laminate having a three-layer structure of PP/PE/PP, and the like), polyimide, aramid, or polyvinylidene fluoride-hexafluoropropylene (PVdF-HFP), and the like; a glass fiber; etc.

The thickness of the microporous (microporous film) separator cannot be unequivocally defined since the thickness varies depending on an intended use. For example, the thickness of a separator used in the applications of a motor-driving secondary battery such as an electric vehicle (EV), a hybrid electric vehicle (HEV), a fuel cell vehicle (FCV), and the like; etc. is desirably 4 to 60 $\mu$m in a single layer or multiple layers. The microporous (microporous film) separator desirably has a fine pore diameter of 1 $\mu$m at maximum (usually a pore diameter of approximately several tens nm).

Examples of the nonwoven fabric separator include a nonwoven fabric using a conventionally known material such as cotton, rayon, acetate, nylon, polyester; a polyolefin such as PP, PE, and the like; polyimide, aramid, and the like alone or in combination thereof. The bulk density of the nonwoven fabric should not be particularly limited as long as sufficient battery characteristics can be obtained by a polymer gel electrolyte with which the nonwoven fabric is impregnated. In addition, the thickness of the nonwoven fabric separator only needs to be the same as that of the electrolyte layer, and is preferably 5 to 200 $\mu$m, and particularly preferably 10 to 100 $\mu$m.

Moreover, it is also preferable to use a laminate obtained by laminating a heat resistant insulating layer on the above-described microporous (microporous film) separator or nonwoven fabric separator as a resin porous substrate layer (separator with a heat resistant insulating layer). The heat resistant insulating layer is a ceramic layer including inorganic particles and a binder. As the separator with a heat resistant insulating layer, a separator having high heat resistance, which has a melting point or thermal softening point of 150°C or higher, and preferably 200°C or higher, is used. The presence of the heat resistant insulating layer relaxes an internal stress of the separator which increases as the temperature rise, and therefore, an effect of suppressing thermal shrinkage can be obtained. As a result, induction of a short-circuit between electrodes of a battery can be prevented, leading to a battery configuration in which the performance is hardly lowered as the temperature rises. In addition, the presence of the heat resistant insulating layer improves a mechanical strength of the separator with the heat resistant insulating layer, and hardly breaks a film of the separator. Furthermore, the separator is hardly curled in a step of producing a battery due to the effect of suppressing thermal shrinkage and the high mechanical strength.

The inorganic particles in the heat resistant insulating layer contribute to the mechanical strength of the heat resistant insulating layer and the effect of suppressing thermal shrinkage. A material used as the inorganic particles is not particularly limited. Examples thereof include oxides ($SiO_2$, $Al_2O_3$, $ZrO_2$, and $TiO_2$), hydroxides, and nitrides of silicon, aluminum, zirconium, and titanium, and composites thereof. These inorganic particles may be derived from mineral resources such as boehmite, zeolite, apatite, kaolin, mullite, spinel, olivine, mica, or the like or may be artificially produced. Further, these inorganic particles may be used alone or in combination of two or more kinds thereof. Among those, from the viewpoint of cost, the inorganic particles, silica ($SiO_2$), or alumina ($Al_2O_3$) is preferably used, and alumina ($Al_2O_3$) is more preferably used.

The weight per unit area of the inorganic particles is not particularly limited, but is preferably 5 to 15 $g/m^2$. The weight per unit area within this range is preferable in terms of obtaining sufficient ion conductivity and maintaining heat resistant strength.

The binder in the heat resistant insulating layer has a function of binding inorganic particles to each other or binding the inorganic particles to a resin porous substrate layer. With the binder, the heat resistant insulating layer is stably formed, and thus, peeling between the resin porous substrate layer and the heat resistant insulating layer is prevented.

The binder used in the heat resistant insulating layer is not particularly limited, and for example, a compound such as carboxymethyl cellulose (CMC), polyacrylonitrile, cellulose, an ethylene-vinyl acetate copolymer, polyvinyl chloride, styrene-butadiene rubber (SBR), isoprene rubber, butadiene rubber, polyvinylidene fluoride (PVDF), polytetrafluoroethylene (PTFE), polyvinyl fluoride (PVF), methyl acrylate, and the like can be used as the binder. Among those, carboxymethyl cellulose (CMC), methyl acrylate, or polyvinylidene fluoride (PVDF) is preferably used. These compounds may be used alone or in combination of two or more kinds thereof.

The content of the binder in the heat resistant insulating layer is preferably 2 to 20% by mass with respect to 100% by mass of the heat resistant insulating layer. If the content of the binder is 2% by mass or more, the peeling strength between the heat resistant insulating layer and the resin porous substrate layer can be enhanced, and vibration resistance of the separator can be improved. On the other hand, if the content of the binder is 20% by mass or less, a gap between the inorganic particles can be maintained properly, and therefore, sufficient lithium ion conductivity can be secured.

The thermal shrinkage of the separator with a heat resistant insulating layer is preferably 10% or less in both MD and TD after the separator is held under conditions of 150°C and 2 $gf/cm^2$ for one hour. By using such a highly heat resistant material, the heat generation amount is increased, and shrinkage of the separator can be prevented effectively even when the temperature in a battery reaches 150°C. As a result, induction of a short-circuit between electrodes of a battery can be prevented, leading to a battery configuration in which the performance is hardly lowered as the temperature rises.

[Positive Electrode Current Collecting Plate and Negative Electrode Current Collecting Plate]

A material constituting current collecting plates (25 and 27) is not particularly limited and a known highly conductive material used in the related art as a current collecting plate for use in a lithium ion secondary battery can be used. Preferable examples of the material constituting the current collecting plate include a metal material such as aluminum, copper, titanium, nickel, stainless steel (SUS), an alloy thereof, and the like. From the viewpoints of light weight, corrosion resistance, and high conductivity, aluminum and copper are more preferable, and aluminum is particularly preferable . In addition, the same material or different materials may be used for the positive electrode current collecting plate 25 and the negative electrode current collecting plate 27.

[Positive Electrode Lead and Negative Electrode Lead]

Moreover, although not illustrated, a current collector 11 may be electrically connected to the current collecting plates (25 and 27) via a positive electrode lead or a negative electrode lead. As a material constituting the positive electrode and the negative electrode leads, a material for use in a known lithium ion secondary battery can be similarly adopted. Further, a portion taken out of an exterior material is preferably coated with a heat resistant and insulating thermal shrinkable tube or the like such that the portion has no influence on a product (for example, vehicle parts, in particular, an electronic device or the like) by electric leak due to contact with neighboring devices, wiring, or the like.

[Seal Part]

The seal part (insulating layer) has a function of preventing a contact between current collectors and a short-circuit at an end of a single battery layer. A material constituting the seal part may be any material as long as having an insulating property, a sealing property against falling off of a solid electrolyte, a sealing property against moisture permeation from the outside, heat resistance under a battery operating temperature, and the like. Examples of the material include an acrylic resin, a urethane resin, an epoxy resin, a polyethylene resin, a polypropylene resin, a polyimide resin, a rubber (ethylene-propylene-diene rubber: EPDM), and the like. An isocyanate-based adhesive, an acrylic resin-based adhesive, a cyanoacrylate-based adhesive, or the like may be used, and a hot melt adhesive (a urethane resin, a polyamide resin, or a polyolefin resin) or the like may be used. Among those, a polyethylene resin and a polypropylene resin are preferably used as a material constituting an insulating layer from the viewpoints of corrosion resistance, chemical resistance, manufacturing easiness (film-forming property), economic efficiency, and the like, and a resin mainly containing an amorphous polypropylene resin and obtained by copolymerizing ethylene, propylene, and butene is preferably used.

[Battery Outer Casing Body]

As the battery outer casing body, a known metal can case can be used, and in addition, a bag-like case using the laminate film 29 including aluminum, which is capable of coating a power generating element as shown in Fig. 1, can be used. For the laminate film, for example, a laminate film having a three-layer structure obtained by laminating PP, aluminum, and nylon in this order, or the like can be used, but the laminate film is not limited thereto at all. A laminate film is desirable from the viewpoint of being able to be suitably used for a large device battery for EV or HEV due to a high output and excellent cooling performance. In addition, the outer casing body is more preferably an aluminum laminate since a group pressure to a power generating element applied from the outside can be easily adjusted, and the thickness of an electrolyte solution layer can be easily adjusted to a desired thickness.

It is possible to improve output characteristics at a high rate by incorporating the above-mentioned negative electrode for a non-aqueous electrolyte secondary battery into the bipolar secondary battery of the present aspect. Therefore, the bipolar secondary battery of the present aspect is suitably used as a power source for driving EV or HEV.

[Cell Size]

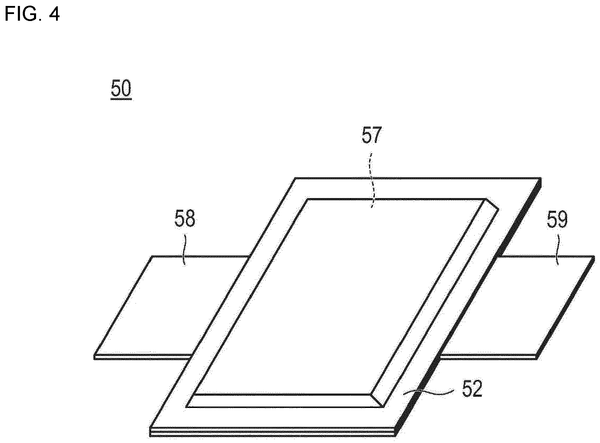

Fig. 4 is a perspective view illustrating an appearance of a flat bipolar lithium ion secondary battery which is a typical embodiment of a secondary battery.

As illustrated in Fig. 4, a flat bipolar secondary battery 50 has a rectangular flat shape, and a positive electrode tab 58 and a negative electrode tab 59 are illustrated from both sides thereof to draw electric power. A power generating element 57 is surrounded by a battery outer casing body (laminate film 52) of the bipolar secondary battery 50, a periphery thereof is thermally fused, and the power generating element 57 is sealed while the positive electrode tab 58 and the negative electrode tab 59 are drawn to the outside. Here, the power generating element 57 corresponds to the power generating element 21 of the bipolar secondary battery 10 illustrated in Fig. 1 described above. In the power generating element 57, a plurality of bipolar electrodes 23 are laminated through the electrolyte layers 17.

Moreover, the lithium ion secondary battery is not limited to a laminate type battery having a flat shape. For example, a wound-type lithium ion secondary battery may, for example, have a cylindrical shape or a rectangular flat shape obtained by deforming such a cylindrical shape, but is not particularly limited thereto. In the battery having a cylindrical shape, a laminate film, a conventional cylindrical can (metal can), or the like may be used for an outer casing body thereof, but is not particularly limited thereto. A power generating element is preferably packaged with an aluminum laminate film. This form can achieve a reduction in weight.

Furthermore, drawing of the tabs (58 and 59) illustrated in Fig. 4 is not also particularly limited. For example, the positive electrode tab 58 and the negative electrode tab 59 may be drawn from the same side, or each of the positive electrode tab 58 and the negative electrode tab 59 may be divided into a plurality of parts to be drawn from the sides, without being limited to that illustrated in Fig. 4. In addition, in the wound-type lithium ion secondary battery, a terminal may be formed using, for example, a cylindrical can (metal can) in place of the tab.

In a typical electric vehicle, the storage space of a battery is approximately 170 L. Since a cell and an auxiliary machine such as a charge/discharge control device and the like are stored in this space, the storage space efficiency of the cell is usually approximately 50%. The loading efficiency of the cell in this space is a factor that dominates a cruising distance of an electric car. When the size of a unit cell is small, the loading efficiency is impaired, and thus, the cruising distance cannot be secured.

Therefore, in the present invention, the battery structure in which the power generating element is covered with the outer casing body is preferably large. Specifically, the length of a short side of a laminate cell battery is preferably 100 mm or more. Such a large battery can be used in vehicle applications. Here, the length of the short side of the laminate cell battery refers to a side having the shortest length. An upper limit of the length of the short side is not particularly limited, but is usually 400 mm or less.

[Volume Energy Density and Rated Discharge Capacity]

In a general electric vehicle, a market request is that a traveling distance (cruising distance) per one charge is 100 km. Considering such a cruising distance, the volume energy density of a battery is preferably 157 Wh/L or more, and a rated capacity thereof is preferably 20 Wh or more.

In addition, an increase in the size of a battery can be defined from a relationship to battery area and battery capacity from the viewpoint of a large battery different from the viewpoint of the physical size of an electrode. For example, in a case of a laminate battery which is of a flat laminate type, a battery in which a value of the ratio of a battery area (a projected area of the battery including a battery outer casing body) to the rated capacity is 5 cm$^2$/Ah or more and the rated capacity is 3 Ah or more has a large battery area per unit capacity, and therefore, more easily makes the problem of the present invention revealed. That is, due to ion transfer resistance and electron transfer resistance accompanying thickening of a negative electrode active material layer, a charging and discharging reaction is less likely to progress uniformly not only in a thickness direction of the negative electrode active material layer but also in a planar direction, and output characteristics (particularly, output characteristics at a high rate) of the battery tend to be further lowered. Therefore, the non-aqueous electrolyte secondary battery according to the present aspect is preferable since such a large battery as described above has a more advantage due to exhibition of the effect of the invention of the present application.

[Battery Pack]

A battery pack is constituted by connecting a plurality of batteries to each other. Specifically, the battery pack is formed by serialization of at least two batteries, parallelization thereof, or serialization and parallelization thereof. By serialization and parallelization, it is possible to freely adjust a capacity and a voltage.

By connecting a plurality of batteries to each other in series or in parallel, it is also possible to form a small attachable or detachable battery pack. In addition, by further connecting a plurality of the small attachable or detachable battery packs to each other in series or in parallel, it is also possible to form a large-capacity and large-output battery pack suitable for a vehicle driving power source or auxiliary power source required to have a high volume energy density and a high volume output density, and it may be decided how many batteries are connected to each other to manufacture a battery pack and how many stages of small assembled batteries are laminated to manufacture a large-capacity battery pack, depending on the battery capacity or output of a vehicle (electric vehicle) on which the batteries are mounted.

[Vehicle]

In the non-aqueous electrolyte secondary battery of the present aspect, a discharge capacity is maintained even after a long-term use, and cycle characteristics are favorable. Furthermore, a volume energy density is high. In a case of use for a vehicle such as an electric vehicle, a hybrid electric vehicle, a fuel cell vehicle, or a hybrid fuel cell vehicle, higher capacity, a larger size, and a longer life are required than in a case of applications of electric/portable electronic devices. Therefore, the non-aqueous electrolyte secondary battery can be suitably used as a vehicle power source, for example, for a vehicle driving power source or an auxiliary power source.

Specifically, a battery or a battery pack formed by combining a plurality of the batteries can be mounted on the vehicle. In the present invention, a long-life battery excellent in long-term reliability and output characteristics can be constituted, and thus, by mounting the battery, a plug-in hybrid electric vehicle having a long EV travel distance and an electric vehicle having a long one-charge travel distance can be constituted. A reason therefor is that an automobile having a long service life and high reliability can be provided by using a battery or a battery pack formed by combining a plurality of the batteries in, for example, an automobile such as a hybrid car, a fuel cell electric car, and an electric vehicle (including a two-wheel vehicle (motor bike) or a three-wheel vehicle in addition to all four-wheel vehicles (an automobile, a truck, a commercial vehicle such as a bus and the like, a compact car, etc.)). However, the applications are not limited to the automobiles, and the battery can also be applied to, for example, various power sources of other vehicles, for example, a moving object such as an electric train and the like, or can also be used as a power source for loading such as an UPS device and the like.

Examples

Hereinafter, the present invention will be described in more detail with reference to Examples. However, the technical scope of the present invention is not limited only to the following Examples . Furthermore, "parts" mean "parts by mass" unless otherwise specified. In addition, steps from preparation of a positive electrode active material slurry and a negative electrode active material slurry to manufacture of a non-aqueous electrolyte secondary battery were performed in a glove box.

[Example 1]

<Preparation of Electrolyte Solution>

An electrolyte solution was obtained by dissolving $LiPF_6$ at a ratio of 1 mol/L in a mixed solvent (volume ratio of 1 : 1) of ethylene carbonate (EC) and propylene carbonate (PC).

<Manufacture of First Electrode Active Material Layer>

(Manufacture of First Positive Electrode Active Material Layer)

100 parts by mass of $LiNi_{0.8}Co_{0.15}Al_{0.05}O_2$ powder (average particle diameter (primary particle diameter): 6 $\mu$m) as a positive electrode active material, 6.2 parts by mass of acetylene black [Denka Black (registered trademark) manufactured by Denka Co., Ltd.] (average particle diameter (primary particle diameter) : 0.036 $\mu$m) as a conductive aid, 0.4 parts by mass of a carbon fiber (DONACARBO Milled S-243 manufactured by Osaka Gas Chemicals Co., Ltd. : average fiber length of 500 $\mu$m, average fiber diameter of 13 $\mu$m: electric conductivity of 200 mS/cm)) as a conductive aid, 31.7 parts by mass of a 8%-by-mass PVdF (weight average molecular weight: 380,000) solution, and 61.6 parts by mass of NMP as a solvent were put into a container and stirred at 2,000 rpm for 4 minutes to obtain a first positive electrode active material slurry. The concentration of the solid content of the first positive electrode active material slurry was 55% by mass.

A carbon-coated aluminum foil (manufactured by Showa Denko K. K., a thickness of a carbon layer of 1 $\mu$m, a thickness of an aluminum layer of 20 $\mu$m, and a size of 61 × 72 mm) as a positive electrode current collector was prepared and masked using a PET sheet such that the size of a slurry-applied portion was 29 × 40 mm. The first positive electrode active material slurry prepared above was applied onto the positive electrode current collector using an applicator while controlling the amount of the slurry to be applied such that a gap of the applicator was 160 $\mu$m, followed by drying at 60°C to remove the solvent. Thereafter, the electrode was pressed using a roll press and then dried in vacuo at 120°C to obtain a first positive electrode active material layer. In addition, the first positive electrode active material layer has a thickness of 31.1 $\mu$m, a porosity of 25%, and a density of 3.2 g/cm$^3$.

(Manufacture of First Negative Electrode Active Material Layer)

100 parts by mass of hard carbon (hardly graphitized carbon) powder (average particle diameter (primary particle diameter): 18 $\mu$m) (Carbotron (registered trademark) PS (F) manufactured by Kureha Battery Materials Japan Co., Ltd.) as a negative electrode active material, 11.3 parts by mass of acetylene black [Denka Black (registered trademark) manufactured by Denka Co, Ltd.] (average particle diameter (primary particle diameter): 0.036 $\mu$m) as a conductive aid, 2.4 parts by mass of a carbon fiber (DONACARBO Milled S-243 manufactured by Osaka Gas Chemical Co., Ltd.: average fiber length of 500 $\mu$m, average fiber diameter of 13 $\mu$m: electric conductivity of 200 mS/cm) as a conductive aid, 8.6 parts by mass of SBR as a binder, and 287 parts by mass of water were put into a container and stirred at 2,000 rpm for 4 minutes to obtain a first negative electrode active material slurry. The concentration of the solid content of the first negative electrode active material slurry was 30% by mass.

A copper foil (manufactured by Thank Metal Co., Ltd., a thickness of 10 $\mu$m, a size of 61 × 72 mm) as a negative electrode current collector was prepared and masked using a PET sheet such that the size of a slurry-applied portion was 33 × 44 mm. The first negative electrode active material slurry was applied onto the negative electrode current collector using an applicator while controlling the amount of the slurry to be applied such that a gap of the applicator was 200 $\mu$m followed by drying at 60°C to remove the solvent. Thereafter, the electrode was pressed using a roll press and then dried in vacuo at 120°C to obtain a first negative electrode active material layer . In addition, the first negative electrode active material layer has a thickness of 39.2 $\mu$m, a porosity of 26%, and a density of 1.1 g/cm$^3$.

<Manufacture of Second Electrode Active Material Layer>

(Manufacture of Second Positive Electrode Active Material Layer)

A material 1 formed of 93.9 parts by mass of $LiNi_{0.8}Co_{0.15}Al_{0.05}O_2$ powder (average particle diameter (primary particle diameter): 6 $\mu$m) as a positive electrode active material, 5.8 parts by mass of acetylene black [Denka Black (registered trademark) manufactured by Denka Co., Ltd.] (average particle diameter (primary particle diameter): 0.036 $\mu$m) as a conductive aid, and 2.0 parts by mass of a carbon fiber (DONACARBO Milled S-243 manufactured by Osaka Gas Chemicals Co., Ltd.: average fiber length of 500 $\mu$m, average fiber diameter of 13 $\mu$m: electric conductivity of 200 mS/cm)) as a conductive aid was dried for 16 hours at 120°C under reduced pressure of 100 mmHg to carry out removal of moisture contained.

Subsequently, in a dry room, the electrolyte solution prepared above was added to the material 1 dried above such that the mass ratio of the dried material 1 : the electrolyte solution reached 1 : 0.47. The obtained mixture was mixed at 2,000 rpm for 120 seconds using a mixing defoaming machine (ARE-310, manufactured by Thinky Corporation) to obtain a second positive electrode active material slurry. In addition, the concentration of the solid content of the obtained positive electrode active material slurry was 66% by mass.

The second positive electrode active material slurry prepared above was applied onto the first positive electrode active material layer manufactured above using an applicator while controlling the amount of the slurry to be applied such that a gap of the applicator was 570 $\mu$m. An aramid sheet (thickness of 45 $\mu$m, manufactured by Japan Vilene Co., Ltd.) was arranged on the surface of the slurry after application and pressed at a pressing pressure of 35 MPa using HIGH PRESSURE JACK J-1 (manufactured by AS ONE Corporation) to obtain a second positive electrode active material layer. In addition, the second positive electrode active material layer had a thickness of 298.2 $\mu$m, a porosity of 41%, and a density of 2.5 g/cm$^3$.

(Manufacture of Second Negative Electrode Active Material Layer)

A material 2 formed of 94 parts by mass of hard carbon (hardly graphitized carbon) powder (average particle diameter (primary particle diameter) : 18 $\mu$m) (Carbotron (registered trademark) PS (F) manufactured by Kureha Battery Materials Japan Co., Ltd.) as a negative electrode active material, 4 parts by mass of acetylene black [Denka Black (registered trademark) manufactured by Denka Co, Ltd.] (average particle diameter (primary particle diameter) : 0.036 $\mu$m) as a conductive aid, and 2 parts by mass of a carbon fiber (DONACARBO Milled S-243 manufactured by Osaka Gas Chemical Co., Ltd.: average fiber length of 500 $\mu$m, average fiber diameter of 13 $\mu$m: electric conductivity of 200 mS/cm) as a conductive aid was dried for 16 hours at 120°C under reduced pressure of 100 mmHg to carry out removal of moisture contained.

Subsequently, in a glove box, the electrolyte solution prepared above was added to the material 2 dried above such that the mass ratio of the dried material 2 : the electrolyte solution reached 1 : 0.90. The obtained mixture was mixed at 2,000 rpm for 120 seconds using a mixing defoaming machine (ARE-310, manufactured by Thinky Corporation) to obtain a second negative electrode active material slurry. In addition, the concentration of the solid content of the obtained second negative electrode active material slurry was 55% by mass.

The second negative electrode active material slurry prepared above was applied onto the first negative electrode active material layer manufactured above using an applicator while controlling the amount of the slurry to be applied such that a gap of the applicator was 520 $\mu$m. An aramid sheet (thickness of 45 $\mu$m, manufactured by Japan Vilene Co., Ltd.) was arranged on the surface of the slurry after application and pressed at a pressing pressure of 10 MPa using HIGH PRESSURE JACK J-1 (manufactured by AS ONE Corporation) to obtain a second negative electrode active material layer. In addition, the second negative electrode active material layer had a thickness of 367.4 $\mu$m, a porosity of 32%, and a density of 1.0 g/cm$^3$.

<Evaluation of Properties and States of Electrode Active Material Layer>

The properties and the states of the electrode active material layer were visually evaluated with respect to the positive electrode and the negative electrode manufactured above. As a result, cracks were not observed in both the positive electrode and the negative electrode, and unevenness was hardly present on the surface of the active material layer.

<Manufacture of Non-Aqueous Electrolyte Secondary Battery>

The positive electrode active material layer of the positive electrode and the negative electrode active material layer of the negative electrode obtained above were arranged to face each other, and a separator (manufactured by Celgard, #3501, thickness of 25 $\mu$m, size of 96 $\times$ 107 mm) was arranged therebetween. Further, tabs were respectively connected to the positive electrode current collector and the negative electrode current collector, and a power generating element was sandwiched by an aluminum laminate film-made outer casing body. Further, three sides of the outer casing body were thermally pressure-bonded and sealed to house the power generating element. The electrolyte solution was injected into the power generating element and the outer casing body was sealed in vacuo such that the tabs were led out, thereby obtaining a non-aqueous electrolyte secondary battery. In addition, the amount of the electrolyte solution to be injected was regulated such that the liquid volume coefficient reached 1.15.

[Examples 2 to 5 and Comparative Examples 1 and 2)

A non-aqueous electrolyte secondary battery was obtained in the same manner as in Example 1, except that the thickness of each of the first positive electrode active material layer, the second positive electrode active material, the first negative electrode active material layer, and the second negative electrode active material layer was changed as in Table 1 below. In addition, the thickness of each of the electrode active material layers was controlled by regulating the gap of an applicator at the time of application.

<Evaluation of Input/Output Characteristics>

The battery manufactured in each of Examples and Comparative Examples was charged after complete discharge, the voltage was confirmed, and adjustment to SOC 50% was performed. Thereafter, discharge was performed at 0.1 C for 10 seconds. From a current value $I_{0.1C}$ equivalent to 0.1 C and a voltage change $\Delta V_{0.1C}$ between a voltage after charging and a voltage after discharging, a direct current resistance value was measured. From the measurement results, a resistance ($\Omega$) can be calculated according to the Ohm's law. The resistance ($\Omega$) was multiplied by an electrode area (the area of the positive electrode active material layer) to calculate an area resistance ($\Omega \cdot cm^2$). The results are shown in Table 1. The electrode of Comparison Example 1 could not be evaluated since the electrode active material layer was cracked in the drying step in the process of manufacturing the second electrode active material layer.

[Table 1]

| | Thickness ($\mu$m) of first positive electrode active material layer | Thickness ($\mu$m) of second positive electrode active material layer | Total thickness ($\mu$m) of positive electrode active material layers | Thickness ($\mu$m) of first negative electrode active material layer | Thickness ($\mu$m) of second negative electrode active material layer | Total thickness ($\mu$m) of negative electrode active material layers | Resistance value ($\Omega \cdot cm^2$) |
|---|---|---|---|---|---|---|---|
| Example 1 | 31.1 | 298.2 | 329.3 | 39.2 | 367.4 | 400.6 | 10.7 |
| Example 2 | 78.1 | 234.4 | 312.5 | 96.6 | 292.6 | 389.2 | 10.8 |
| Example 3 | 78.2 | 78.7 | 156.9 | 96.6 | 97.2 | 193.8 | 11.0 |
| Example 4 | 32.4 | 298.7 | 331.1 | None | 415.8 | 415.8 | 13.3 |
| Example 5 | None | 341.0 | 341.0 | 39.4 | 367.1 | 406.5 | 12.6 |
| Comparative Example 1 | 100.2 | None | 100.2 | 125.8 | None | 125.8 | $\times$ |
| Comparative Example 2 | None | 340.8 | 340.8 | None | 416.2 | 416.2 | 15.1 |

As shown in Table 1, the batteries of Example 1 to 5 using the electrodes each having the first electrode active material layer having the binder in a crystallized state on the current collector and the second electrode active material layer not including a binder in this order have a lower contact resistance than the battery of Comparative Example 2 not having the first electrode active material layer. Therefore, it could be seen that the batteries of Examples 1 to 5 have an improved adhesion. In addition, as compared with Comparative Example 1 using only the first electrode active material layer, it was found that cracks in the electrodes were hardly generated even in a case where the layer was thickened.

The present application is based on Japanese Patent Application No. 2017-196951 filed on October 10, 2017, the disclosures of which are incorporated herein by reference in their entirety.

Reference Signs List

10, 50    Bipolar secondary battery
11        Current collector
11a       Outermost layer current collector on positive electrode side

| 11b | Outermost layer current collector on negative electrode side |
| 13 | Positive electrode active material layer |
| 13a | First positive electrode active material layer |
| 13b | Second positive electrode active material layer |
| 15 | Negative electrode active material layer |
| 15a | First negative electrode active material layer |
| 15b | Second negative electrode active material layer |
| 17 | Electrolyte layer |
| 19 | Single battery layer |
| 21, 57 | Power generating element |
| 23 | Bipolar electrode |
| 25 | Positive electrode current collecting plate (positive electrode tab) |
| 27 | Negative electrode current collecting plate (negative electrode tab) |
| 29, 52 | Laminate film |
| 31 | Seal part |
| 58 | Positive electrode tab |
| 59 | Negative electrode tab |
| 101 | PVdF in non-crystallized state |
| 102 | Positive electrode active material |

**Claims**

1. An electrode for a non-aqueous electrolyte secondary battery, comprising:

   a current collector;
   a first electrode active material layer including a first electrode active material, arranged on a surface of the current collector; and
   a second electrode active material layer including a second electrode active material, arranged on a surface of the first electrode active material layer,
   wherein the first electrode active material layer includes a binder in a crystallized state and the second electrode active material layer does not substantially include a binder in a crystallized state.

2. The electrode for a non-aqueous electrolyte secondary battery according to claim 1, wherein a thickness of the first electrode active material layer is 100 $\mu$m or less.

3. The electrode for a non-aqueous electrolyte secondary battery according to claim 1 or 2, wherein the second electrode active material layer is thicker than the first electrode active material layer.

4. The electrode for a non-aqueous electrolyte secondary battery according to any one of claims 1 to 3, wherein a total of a thickness of the first electrode active material layer and a thickness of the second electrode active material layer is 200 $\mu$m or more.

5. A non-aqueous electrolyte secondary battery comprising the electrode for a non-aqueous electrolyte secondary battery according to any one of claims 1 to 4.

FIG. 1

FIG. 2

<u>23</u>

FIG. 3A

FIG. 3B

FIG. 4

## INTERNATIONAL SEARCH REPORT

| International application No. |
|---|
| PCT/JP2018/037818 |

| A. CLASSIFICATION OF SUBJECT MATTER |
|---|
| Int.Cl. H01M4/13(2010.01)i, H01M4/62(2006.01)i |

According to International Patent Classification (IPC) or to both national classification and IPC

| B. FIELDS SEARCHED |
|---|
| Minimum documentation searched (classification system followed by classification symbols)<br>Int.Cl. H01M4/13, H01M4/62 |

Documentation searched other than minimum documentation to the extent that such documents are included in the fields searched

| | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X<br>Y<br>A | JP 2012-150972 A (HITACHI, LTD.) 09 August 2012, claims, paragraph [0015] (Family: none) | 1, 5<br>2, 4<br>3 |
| Y | JP 2009-4181 A (NISSAN MOTOR CO., LTD.) 08 January 2009, claims & US 2008/0318133 A1 claims & EP 2006941 A1 & CN 101330138 A & KR 10-2008-0112134 A | 2, 4 |

☒ Further documents are listed in the continuation of Box C.       ☐ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>21 December 2018 (21.12.2018) | Date of mailing of the international search report<br>08 January 2019 (08.01.2019) |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

| International application No. |
| --- |
| PCT/JP2018/037818 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | JP 2017-54822 A (ASAHI KASEI CORPORATION) 16 March 2017, claims & US 2014/0255796 A1, claims & WO 2013/062056 A1 & EP 2772981 A1 & CN 103891028 A & KR 10-2014-0072105 A | 2, 4 |
| A | JP 2010-282873 A (TOYOTA MOTOR CORP.) 16 December 2010, claims (Family: none) | 1-5 |
| A | JP 2002-313318 A (MATSUSHITA ELECTRIC INDUSTRIAL CO., LTD.) 25 October 2002, claims (Family: none) | 1-5 |

Form PCT/ISA/210 (continuation of second sheet) (January 2015)

**REFERENCES CITED IN THE DESCRIPTION**

**Patent documents cited in the description**

- JP 2006066243 A
- JP 2017196951 A